# FASCICULE DE BREVET EUROPEEN

(11) **EP 4 135 109 B1**
(45) Date de publication et mention de la délivrance du brevet: **24.04.2024**
(21) Numéro de dépôt: 22189203.7
(22) Date de dépôt: 08.08.2022
(51) Int. Cl.: H01M 50/211, H01M 50/30, H01M 50/216, H01M 50/358

(54) **AGENCEMENT DE VENTILATION D'URGENCE POUR BOÎTIER DE BATTERIE(S) ET PROCEDE D ASSEMBLAGE**
NOTBELÜFTUNGSANORDNUNG FÜR BATTERIEGEHÄUSE UND ENTSPRECHENDES MONTAGEVERFAHREN
ARRANGEMENT OF EMERGENCY VENTILATION FOR BATTERY UNIT(S) AND ASSEMBLY METHOD

(30) Priorité: 09.08.2021 FR 2108596
(43) Date de publication de la demande: 15.02.2023
(73) Titulaire: SOGEFI FILTRATION, 78280 Guyancourt (FR)
(72) Inventeur: COLLICARD, Florent, 35140 SAINT-AUBIN-DU-CORMIER (FR); DONETTI, Jimmy, 88230 BAN SUR MEURTHE CLEFCY (FR); GUYON, David, 78280 GUYANCOURT (FR)
(74) Mandataire: Plasseraud IP

(56) Documents cités:
- EP-A1- 0 756 338
- EP-A1- 3 284 985
- DE-A1-102019 100 085
- US-B2- 7 951 474

## Description

La présente divulgation relève du domaine des systèmes de batterie, notamment des équipements de ventilation de batterie incluant un bouchon de ventilation permettant de décharger de l'air à haute pression. L'invention concerne plus particulièrement un agencement de ventilation d'urgence se montant sur le boîtier d'une batterie/alimentation électrique et un procédé d'assemblage d'un tel agencement.

On connaît, par le document US 4328290 A, des systèmes à bouchon d'évacuation d'air pour batterie. Ces systèmes, qui utilisent l'aptitude à la déformation d'un joint annulaire, ne permettent pas une ventilation d'urgence avec un flux de gaz sortant important.

Comme décrit dans le document DE 102019100085 A1, certains systèmes de ventilation prévoient un couvercle monté sur une base fixement accrochée au boîtier de batterie. Le couvercle porte une membrane associée à un support mobile, qui se soulève en réponse à une accumulation de pression à l'intérieur du boîtier. La mise à l'air est réalisée suivant deux modes : l'un par défaut permis par la perméabilité de la membrane, l'autre d'urgence qui libère une large section de passage pour l'échappement d'air. L'accumulation de pression au-delà d'un seuil prédéterminé (seuil de surpression) permet de surmonter la force d'un ressort hélicoïdal qui sollicite la membrane et son support vers une zone de siège de la base.

Avec ce type de sécurité, si la batterie continue à fonctionner dans un état défectueux ou correspondant à un emballement thermique, l'aération massive peut permettre de limiter ou éviter des dommages irréversibles pour la batterie et éventuellement de blessures graves, par exemple en cas d'incendie. L'assemblage requis dans DE 102019100085 A1 est cependant assez complexe.

Il existe donc un besoin pour des dispositifs de conception simple, utilisables efficacement pour la ventilation d'urgence des batteries.

La présente divulgation vient améliorer la situation.

A cet effet, il est proposé un agencement de ventilation pour boîtier de batterie (boîtier d'alimentation électrique), en particulier comprenant une ou plusieurs batteries, l'agencement comprenant :
- un élément de connexion apte à se monter dans une ouverture du boîtier, l'élément de connexion présentant un corps annulaire s'étendant autour d'un axe central et apte à délimiter un canal d'évacuation d'air présent à l'intérieur du boîtier, le corps annulaire présentant une base annulaire permettant une retenue axiale contre le boîtier, directement ou par l'intermédiaire d'un joint annulaire, le corps annulaire présentant un bord libre distal du boîtier, opposé à la base;
- un couvercle d'obturation du canal, le couvercle se montant sur le corps annulaire par emboîtement suivant une direction de rapprochement vers la base, le couvercle comprenant une portion d'obturation, s'étendant transversalement par rapport à l'axe central ;
- des moyens d'étanchéité pour permettre de réaliser un contact annulaire étanche entre le couvercle et le corps annulaire ; et
- au moins un organe de verrouillage verrouillant une position axiale d'emboîtement du couvercle pour laquelle le contact annulaire étanche est réalisé;

dans lequel l'organe de verrouillage vient en prise contre au moins une surface de butée axiale appartenant à l'élément de connexion,
et dans lequel l'organe de verrouillage, qui est distinct du couvercle, de l'élément de connexion et des moyens d'étanchéité, est déformable pour déverrouiller l'emboîtement du couvercle (typiquement lorsque la surpression du côté de l'air présent dans le canal d'évacuation dépasse un seuil).

Typiquement, l'au moins un organe de verrouillage, longe et/ou entoure, sur plus d'une demi-circonférence, l'un au moins parmi l'élément de connexion et le couvercle. La partie de verrouillage peut être en contact éventuellement discontinu avec le couvercle et en contact avec l'élément de connexion au niveau d'un ou plusieurs bords de prise. Une forme générale annulaire de l'organe de verrouillage peut être préférée. Le couvercle peut inclure une région de support, annulaire, permettant de maintenir une position axiale déterminée de l'organe de verrouillage dans laquelle cet organe pénètre dans une zone de gorge qui est en-vis-à-vis de cette région de support.

Dans des formes de réalisation, le verrouillage est réalisé par une pièce, organe de verrouillage ou partie de verrouillage qui entoure ou est entouré(e) par une zone de chevauchement entre l'élément de connexion et le couvercle, en venant en prise contre l'au moins une surface de butée axiale.

Avec cet agencement, la conception est simplifiée, la partie de verrouillage servant à verrouiller, de façon mécanique typiquement, la position fermée du couvercle tout en autorisant la ventilation par sa déformation, dans les conditions de surpression correspondant à un besoin pour une ventilation d'urgence. La déformation peut être une déformation élastique, le cas échéant utilisée lors d'un déplacement d'emboîtement, avant le verrouillage qui peut résulter d'une force de rappel élastique vers la conformation par défaut de la partie de verrouillage. La déformation, typiquement dans un plan transverse, produite lors du montage ou emboîtement (en réponse à une force de poussée) peut être répétée en réponse à la force de traction en situation de surpression importante sous le couvercle, ce qui autorise la ventilation d'urgence.

Avantageusement, le verrouillage peut être permis en utilisant une seule pièce constituant un organe de verrouillage unique, qui vient en prise radialement vers l'intérieur sous un bord de prise correspondant. Que la réalisation du verrouillage soit permise par une telle pièce ou par une partie de verrouillage fonctionnellement équivalente, on comprend que les moyens de verrouillage peuvent se monter sélectivement ailleurs que dans les zones d'étanchéité, de préférence en montant préalablement ces moyens de verrouillage sur le couvercle. Des pièces d'étanchéité peuvent être montées contre des régions de fixation éloignées, typiquement prévues sur l'élément de connexion : il est permis de réaliser un assemblage sans aucune interférence entre les zones d'étanchéité et la zone de prise pour le verrouillage.

L'agencement peut être assemblé en obtenant l'étanchéité entre l'élément de connexion et le couvercle avant le montage pour couvrir une ouverture de boîtier de batterie. Une conception préassemblée, sans mobilité du couvercle verrouillé, permet à l'agencement de pouvoir obturer efficacement l'ouverture, de préférence de façon étanche aux gaz, dans un environnement soumis à des vibrations. C'est le cas notamment lorsque le boîtier de batterie est monté dans un véhicule motorisé, par exemple une automobile ou autre engin roulant.

Dans des options de réalisation, l'au moins organe de verrouillage est supporté par le couvercle, par exemple en pouvant se déformer avec un débattement radial de segments d'engagement espacés les uns des autres et distribués dans deux branches exerçant une fonction de serrage sur un portion du connecteur/élément de connexion insérée entre ces branches par l'action d'emboîtement longitudinal.

Selon une particularité, le couvercle présente une portion tubulaire apte à loger une portion d'insertion prévue dans l'élément de connexion/

Typiquement, l'organe de verrouillage, supporté par la portion tubulaire du couvercle, est adapté pour venir s'engager, de préférence par le dessous, contre un bord de prise appartenant à la portion d'insertion afin de verrouiller la position axiale d'emboîtement du couvercle.
Dans des formes de réalisation, ce verrouillage est réalisable uniquement dans une position de chevauchement de la portion tubulaire autour de la portion d'insertion. L'organe de verrouillage peut s'étendre ou s'insérer (s'insérer latéralement) dans au moins un évidement ou fenêtre de la portion tubulaire, afin d'exercer une action de serrage contre la portion d'insertion. L'organe de verrouillage peut être déformable (élastiquement) par déformation radiale vers l'extérieur.

Dans des formes de réalisation, l'organe de verrouillage s'étend de façon annulaire autour de l'axe central. Les moyens de verrouillage peuvent consister en un seul élément monobloc, formant un organe de verrouillage unique.

Dans des exemples de construction de l'organe de verrouillage, il est prévu une ou plusieurs des dispositions suivantes :
- l'organe de verrouillage est réalisé d'une seule pièce.
- la pièce est apte à être déformée sans pliage, c'est-à-dire en conservant sa géométrie/forme géométrique générale, de préférence par modification d'un espacement entre deux extrémités de cette pièce qui sont voisines l'une de l'autre.
- l'organe de verrouillage est allongé, par exemple de type filaire, et s'étend entre un bord circonférentiel interne et un bord circonférentiel externe, l'organe de verrouillage étant déformable sans variation de la largeur définie/délimitée entre le bord circonférentiel interne et le bord circonférentiel externe.
- la plus courte dimension de l'organe de verrouillage est une hauteur mesurée suivant une direction parallèle à l'axe central, la hauteur étant par exemple inférieure ou égale à 8 mm.
- l'organe de verrouillage est plat, et de préférence disposé sensiblement dans un plan perpendiculaire à l'axe central.
- l'organe de verrouillage est apte à enserrer la portion d'insertion au travers de la portion tubulaire.
- des fenêtres sont prévues avec une délimitation par des rebords axiaux, sur le couvercle, les moyens ou organe(s) de verrouillage siégeant/reposant axialement sur au moins deux de ces rebords axiaux.
- l'au moins un organe de verrouillage consiste en une agrafe qui présente deux branches d'enserrement reliées à une même portion intermédiaire.
- l'organe de verrouillage présente une symétrie par rapport à un plan.
- l'organe de verrouillage est réalisé à partir d'un brin métallique présentant une forme générale annulaire avec un unique débouché latéral situé entre deux branches de l'organe de verrouillage.
- l'organe de verrouillage est en matériau composite, éventuellement chargé en fibres de verre et/ou en particules minérales, de préférence sans inclure de métal.
- l'organe de verrouillage présente deux branches aptes à s'écarter, avec deux extrémités libres délimitant une ouverture ou passage d'accès de largeur déterminée.
- l'organe de verrouillage inclut un ou plusieurs segments d'engagement, chacun mobile radialement vers l'extérieur en cas d'application d'un effort allant à l'encontre d'une force de rappel élastique rappelant l'organe vers une conformation de serrage.
- l'écartement entre deux régions de contact entre l'organe de verrouillage et l'élément de connexion, qui sont réparties sur les deux branches, peut être supérieur à la largeur déterminée.
- les deux branches sont raccordées à une unique portion de liaison, constituant la portion intermédiaire opposée au passage d'accès.
- l'organe de verrouillage présente deux portions pliées, constituant deux extrémités opposées de la portion intermédiaire.
- l'organe de verrouillage s'étend dans un plan qui est un plan transversal à l'axe central, de préférence perpendiculaire à l'axe central, et optionnellement perpendiculaire à la direction d'emboitement du couvercle.

Selon une particularité, la portion d'insertion, typiquement insérable dans un fourreau ou portion tubulaire du couvercle, est une tige de guidage qui s'insère linéairement dans la portion tubulaire.

Les caractéristiques exposées dans les paragraphes suivants peuvent, optionnellement, être mises en oeuvre, indépendamment les unes des autres ou en combinaison les unes avec les autres :
- la portion tubulaire peut être éventuellement conçue en tant que tige creuse, pourvue d'au moins une entaille ou fenêtre de réception d'un segment d'engagement appartenant à l'organe de verrouillage.
- la portion d'insertion est une projection annulaire, axialement saillante depuis la base, qui s'insère linéairement dans la portion tubulaire conçue en tant que jupe (jupe extérieure typiquement) du couvercle.
- le jupe du couvercle est pourvue d'au moins une entaille ou fenêtre de réception d'un segment d'engagement appartenant à l'organe de verrouillage.
- l'organe de verrouillage est accessible par l'extérieur du couvercle, à l'état préassemblé de l'agencement de ventilation.
- l'élément de connexion présente un bord prise de forme annulaire et/ou distribué dans au moins deux tronçons espacés l'un de l'autre.
- chaque bord de prise s'étend dans une région annulaire concentrique par rapport à une région de support annulaire entourant ce bord de prise.
- la région de support annulaire appartient au couvercle pour supporter l'organe de verrouillage.
- l'organe de verrouillage est maintenu solidaire du couvercle par la région de support annulaire, aussi bien dans une première configuration d'enserrement avec contact contre l'élément de connexion que dans une deuxième configuration d'enserrement, plus lâche que la première configuration d'enserrement et compatible avec un désemboîtement du couvercle par rapport au corps annulaire.
- l'élément de connexion est typiquement réalisé d'une seule pièce et porte deux joints annulaires d'étanchéité.
- un premier joint parmi les deux joints peut être logé dans une gorge intérieure de la base qui débouche axialement à l'opposé de la portion d'obturation, afin de réaliser une étanchéité annulaire avec le boîtier.
- un deuxième joint parmi les deux joints peut être logé dans une gorge extérieure circonférentielle, pour obtenir une étanchéité annulaire avec le couvercle.
- le couvercle présente en outre une partie de support reliée, de préférence axialement, à la portion d'obturation, pour porter l'organe de verrouillage.
- l'organe de verrouillage s'étend de façon annulaire en longeant circonférentiellement une face interne du corps annulaire appartenant à l'élément de connexion.
- l'organe de verrouillage permet de retenir axialement le couvercle dans la position d'emboîtement en venant en prise contre au moins un relief interne inclus dans la face interne du corps annulaire.
- le corps annulaire peut être réalisé d'une seule pièce en matériau rigide.

Selon un autre aspect, il est proposé une utilisation d'une partie ou organe déformable pour verrouiller l'emboîtement d'un couvercle permettant d'obturer une ouverture prévue dans un boîtier de batterie, en particulier comprenant une ou plusieurs batteries, tout en permettant une ventilation d'urgence en cas de surpression d'air dans le boîtier, avec la particularité que :
- l'organe déformable est disposé pour entrer en prise contre une surface de butée axiale appartenant à un élément de connexion formant un canal d'évacuation d'air obturé par le couvercle,
- l'élément de connexion est monté dans ladite ouverture et présente un corps annulaire s'étendant autour d'un axe central pour délimiter le canal d'évacuation de l'air présent à l'intérieur du boîtier;
- le couvercle se monte sur le corps annulaire par emboîtement, suivant une première direction, parallèlement à l'axe central, des moyens d'étanchéité permettant de réaliser un contact annulaire étanche entre le couvercle et le corps annulaire à l'issue de l'emboîtement (l'étanchéité pouvant le cas échéant être déjà obtenue avant une fin de course d'emboîtement du couvercle) ; et
- l'organe de verrouillage verrouille la position axiale d'emboîtement du couvercle dans laquelle le contact annulaire étanche est réalisé, en entourant ou en étant entouré par une portion de l'élément de connexion elle-même entourée par le couvercle ;
l'organe de verrouillage étant déformable, de préférence élastiquement déformable, de façon à :
- exercer une force de rappel radialement vers l'intérieur, pour permettre au moins un contact de cet organe avec l'élément de connexion ; et
- déverrouiller l'emboîtement du couvercle lorsque la surpression du côté de l'air présent dans le canal d'évacuation dépasse un seuil permettant de surmonter ladite force de rappel, ce grâce à quoi le couvercle peut être repoussé suivant une deuxième direction opposée à la première direction pour libérer l'ouverture.

L'organe de verrouillage peut consister en une pièce annulaire préalablement montée sur le couvercle. Indépendamment de sa conception en une ou plusieurs pièces, cet organe peut être disposé de façon à entourer une zone de chevauchement entre l'élément de connexion et le couvercle, ou à être entouré par cette zone de chevauchement.

Selon un autre aspect, il est proposé un procédé d'assemblage de l'agencement de ventilation présenté précédemment, en utilisant l'élément de connexion apte à se monter dans une ouverture d'un boîtier de batterie en délimitant le canal d'évacuation d'air, le procédé comprenant les étapes consistant essentiellement à :
- fixer le joint annulaire sur la base du corps annulaire de l'élément de connexion;
- monter le couvercle sur le corps annulaire par emboîtement vers la base en entourant le corps annulaire, de façon que la portion d'obturation recouvre un débouché axial du canal;
- simultanément réaliser le contact annulaire étanche entre le couvercle et le corps annulaire, grâce aux moyens d'étanchéité distincts du joint annulaire, et verrouiller la position axiale d'emboîtement du couvercle pour laquelle le contact annulaire étanche est réalisé, par l'au moins un organe de verrouillage ;
l'au moins un organe de verrouillage étant mis en place sur le couvercle de façon à :
- entourer ou être entouré par la zone de chevauchement entre l'élément de connexion et le couvercle, en venant en prise contre l'au moins une surface de butée axiale appartenant à l'élément de connexion, et
- pouvoir se déformer pour déverrouiller l'emboîtement du couvercle lorsque la surpression du côté de l'air présent dans le canal d'évacuation dépasse un seuil.

L'assemblage est ainsi rapide et il est permis d'utiliser un seul organe de verrouillage mobile avec le couvercle pour les actions de verrouillage et déverrouillage. Par exemple, l'au moins un organe de verrouillage est une pièce mise en place sur le couvercle avant l'emboîtement, en écartant deux extrémités opposées de ladite pièce qui est déformable, avant d'enserrer une région annulaire de support appartenant au couvercle.

Selon une particularité, le contact d'étanchéité et le verrouillage par l'organe de verrouillage sont obtenus dans une unité de ventilation préassemblée qui ne recouvre pas encore l'ouverture du boîtier de batterie. L'agencement peut dont être transporté, conditionné et livré de façon robuste, sans risque de détachement du couvercle, et permet de limiter le nombre d'étape(s) de mise en place de l'agencement sur le boîtier de batterie. Un simple vissage ou une connexion baïonnette peut permettre d'obtenir l'étanchéité grâce au joint de la base, tandis que le couvercle va rester dans sa configuration de fermeture étanche, pleinement emboîté sur l'élément de connexion.

### Brève description des dessins

D'autres caractéristiques, détails et avantages apparaîtront à la lecture de la description détaillée ci-après, et à l'analyse des dessins annexés, sur lesquels :
la figure 1 montre, en vue de coupe, une unité de ventilation apte à se monter directement sur une paroi d'un boîtier de batterie, afin d'obturer une ouverture de cette paroi.
la figure 2 est une vue (ici en coupe longitudinale) de l'unité montrée sur la figure 1, illustrant un montage par emboîtement coulissant du couvercle par rapport à un élément de connexion fixe qui présente un réceptacle de coulissement tel qu'une tige creuse agencée centralement dans le canal d'évacuation d'air obturé par un couvercle de l'unité.
la figure 3 est une vue en coupe transversale de l'unité de la figure 1, permettant d'illustrer un exemple d'engagement entre un organe de verrouillage porté par le couvercle et des surfaces de retenue prévu sur un élément de connexion de forme générale annulaire.
la figure 4 est une vue en perspective d'une pièce formant un support de montage du couvercle, portant des moyens d'étanchéité de forme annulaire et appartenant à l'unité de la figure 1.
la figure 5 est une vue en perspective éclatée d'une variante d'agencement de ventilation, dans lequel le couvercle qui est montré de dessous (côté intérieur) peut former une tige creuse portant l'organe de verrouillage et coulissant dans une portion d'insertion du support formé par l'élément de connexion qui délimite un canal d'évacuation apte à prolonger vers l'extérieur le passage de sortie pour les gaz enfermés dans un boîtier de batterie.
la figure 6 est une vue en perspective illustrant, en vue de dessous l'unité de ventilation de la figure 5, à l'état assemblé avant fixation sur le boîtier de batterie.
la figure 7 illustre un exemple de montage de l'unité de ventilation, qui est ici celle de la figure 6, sur une face externe d'une paroi du boîtier de batterie.
La figure 8A est une vue en coupe longitudinale d'une autre variante d'agencement de ventilation, permettant à une projection du connecteur portant un joint d'étanchéité de faire axialement saillie entre une jupe externe du couvercle et un organe de verrouillage placé intérieurement dans le couvercle.
La figure 8B montre en perspective le dessous du couvercle de l'agencement de la figure 8A, avec l'organe de verrouillage monté dans une gorge annulaire, radialement sur l'extérieur d'un anneau rigide inclus dans le couvercle.
La figure 9 illustre, par une succession de trois vues d'un agencement de ventilation, un exemple de retrait du couvercle en réponse à une poussée par des gaz chauds sur ce couvercle, avec une force de poussée qui surmonte la force de rappel élastique d'une agrafe de serrage constituant l'organe de verrouillage.

### Description des modes de réalisation

Il est exposé ci-après, de façon détaillée, plusieurs exemples de modes de réalisation non limitatifs. Sur les différentes figures, des références identiques indiquent des éléments identiques ou similaires.

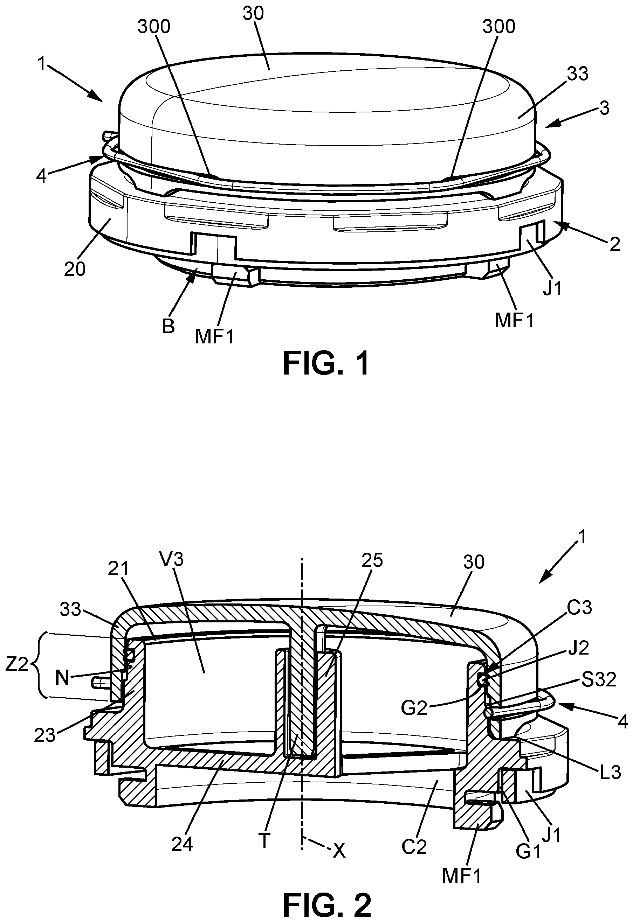

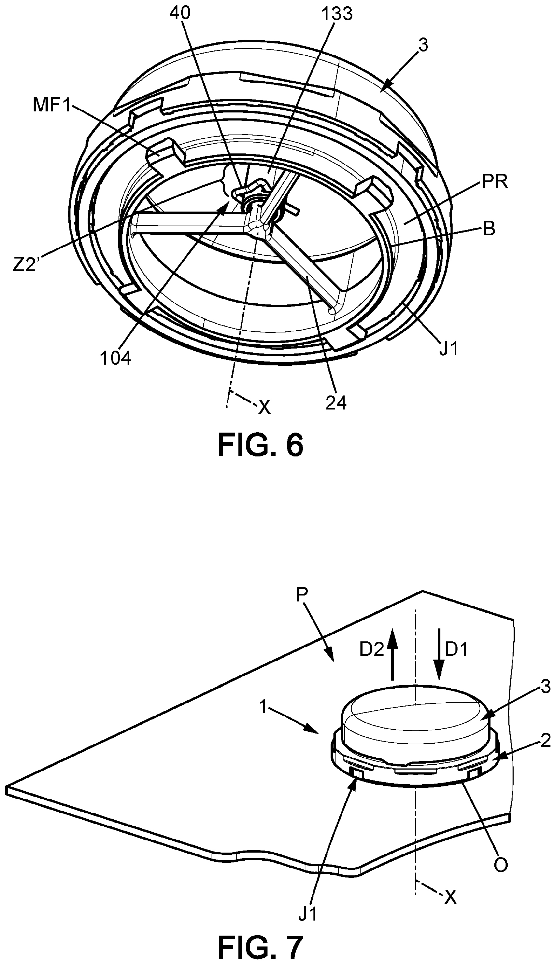

En référence aux figures 1, 2, 5 et 7, il est montré une unité de ventilation pouvant être livrée comme une unité préassemblée, prête à obturer une ouverture O d'un boîtier de batterie (voir figure 7) en se montant typiquement du côté d'une face externe d'une coque ou plaque du boîtier P. Dans ce qui suit, cette unité préassemblée est appelée agencement 1 de ventilation. Dans des options préférées, l'agencement 1 présente une partie de support incluant ou consistant en un élément de connexion 2 pourvu de moyens de fixation MF1, par exemple formés comme des pattes d'insertion/retenue pour le maintien en position sur le boîtier de batterie. Les moyens de fixation MF1 peuvent être prévus dans une base B de l'élément de connexion 2, en s'étendant depuis une partie intérieure qui est optionnellement insérable à l'intérieur du boîtier de batterie. L'élément 2 peut se composer essentiellement d'un connecteur rigide, optionnellement pourvu de joint(s) J1, J2 rapporté(s) sur ce connecteur.

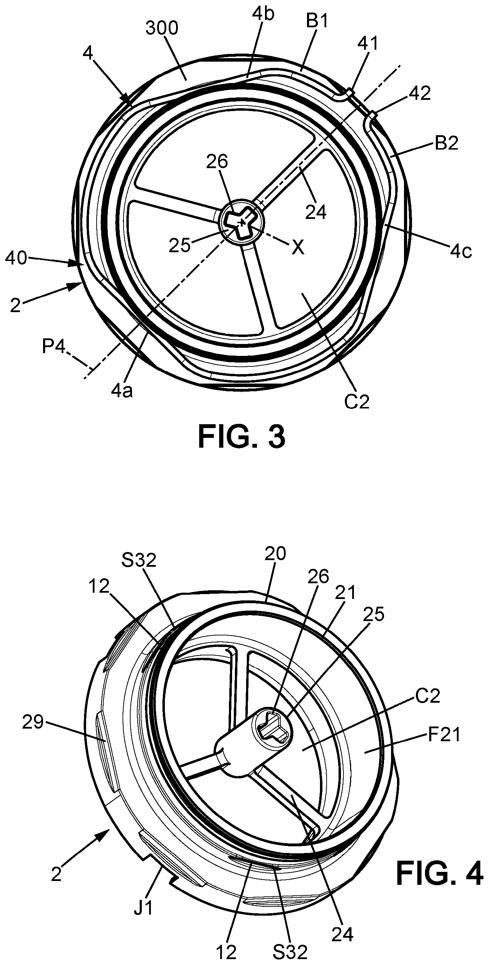

En référence à la figure 7, l'élément de connexion 2 peut inclure une partie intérieure (insérée dans le boîtier de batterie) non visible à l'état monté et une partie extérieure de forme générale annulaire. L'élément de connexion 2 dispose d'un corps annulaire 20 ouvert à ses deux extrémités axiales et pouvant optionnellement permettre de serrer un joint J1 contre le boîtier de batterie. Comme montré sur les figures 2 et 4, le corps annulaire 20 correspond à une bague ou organe tubulaire similaire, qui s'étend longitudinalement autour d'un axe central X, jusqu'à un bord libre 21 axialement distal par rapport à l'ouverture O.

Les moyens de fixation MF1 peuvent être inclus dans une pièce constituant le corps annulaire 20 de l'élément de connexion 2. Plus généralement, l'élément de connexion 2 peut présenter un corps 20 qui est rigide, moulé par injection en une seule pièce, et incluant des moyens de fixation MF1 prévus dans une partie de connexion correspondant à la base B.

Sur la figure 6, on peut voir que la base B peut présenter une portion radiale annulaire PR qui inclut ou forme le fond d'une gorge G1 orientée vers le boîtier en permettant de recevoir un joint J1 annulaire. Ce joint J1 présente une hauteur typiquement plus grande que la profondeur de la gorge G1. Plus généralement, le joint J1 peut faire saillie vers le bas (ici vers le boîtier) en présentant ainsi une surface qui s'étend hors de la gorge G1 et apte à s'appuyer axialement contre le boîtier de batterie. Les faces annulaires de délimitation de la gorge G1 peuvent présenter, chacune, des nervures ou reliefs saillants de retenue du joint J1 annulaire. Ces reliefs ou nervures, distribuées de façon espacée suivant la direction circonférentielle, font saillie radialement vers l'intérieur de la gorge G1.

Des moyens de connexion à baïonnette, avec des pattes en saillie radialement vers l'extérieur, peuvent constituer tout ou partie de ces moyens de fixation MF1. Ici par exemple, les pattes coopèrent avec une bordure de l'ouverture O du boîtier disposant de plusieurs fentes radiales spécifiques distribuées de la même façon que ces pattes. Un mouvement de rotation peut permettre de bloquer la position de l'élément de connexion 2, avec un alignement par rapport à un centre de l'ouverture O. Dans des variantes, la connexion se fait avec un vissage ou avec tout type de rotation pour bloquer l'élément de connexion 2 axialement. Une fixation avec déformation d'un joint à fonction d'ancrage peut aussi être réalisée, le cas échéant sans rotation.

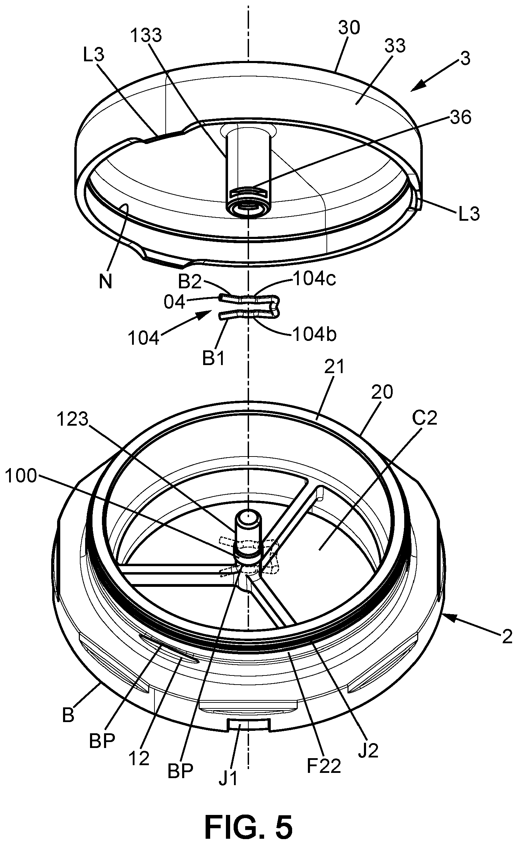

Les moyens de connexion à baïonnette ou, plus généralement, moyens de fixation MF1, peuvent être disposés radialement plus près de l'axe central X que ne l'est la gorge G1. La face latérale externe de la base B ou embase de l'agencement 1 rejoint une face supérieure annulaire de la base B, visible sur les figures 4 et 5, qui appartient à portion radiale PR. Le corps annulaire 20 présente une projection en saillie axialement depuis la portion radiale PR. Cette projection 23 peut prolonger axialement la base B de façon que la base B et la projection 23 délimitent une face interne F21 (commune) annulaire de l'élément de connexion 2. Dans l'exemple non limitatif des figures 1 à 6, des entretoises sont formées depuis cette face interne F21 et il est formé un croisillon ou élément d'entretoisement 24 similaire qui appartient la pièce constitutive du corps annulaire 20. Comme il sera décrit en détail plus loin, un organe de guidage en coulissement (25 ou 123) peut être supporté par l'élément d'entretoisement 24, en s'étendant suivant l'axe central X.

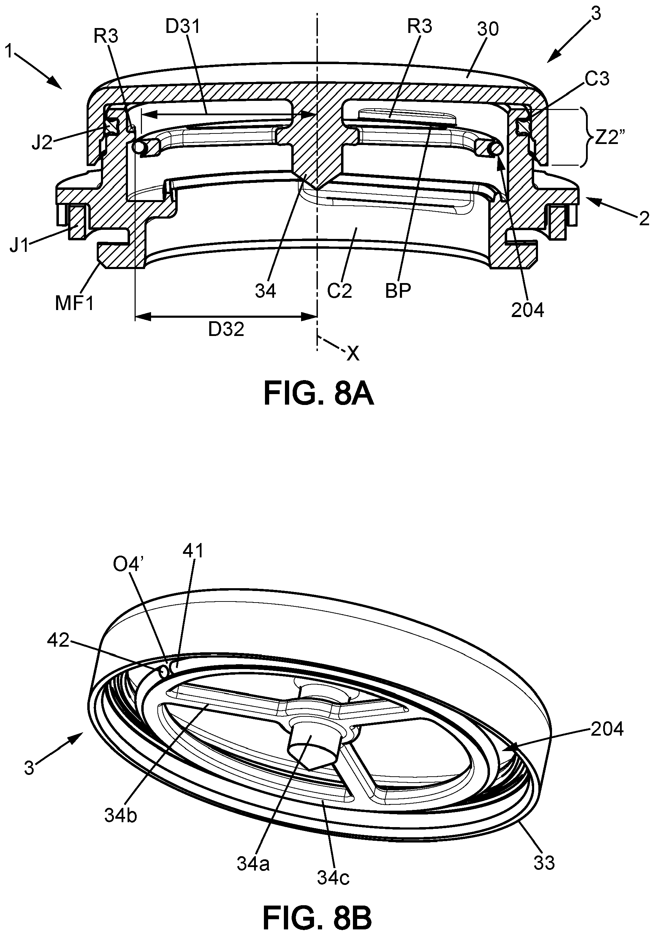

Une tige T ou 133 peut être prévue dans le couvercle 3 pour le guidage. Dans des variantes, comme illustré par exemple aux figures 8A et 8B, le couvercle 3 présente une colonne 34a appartenant à une partie de support 34, qui peut présenter des entretoises 34b d'extension radiale, comme des rayons. Dans tous les cas ses éléments internes qui s'étendent sous la partie d'obturation 30 peuvent participer à un centrage et/ou guidage de l'emboîtement, directement au niveau de la tige T, 133 ou au niveau d'une partie périphérique ou anneau 34c solidaire d'un tige/colonne 34 appartenant à une partie de support 34.

Une face externe F22 de la projection 23 peut constituer une région de fixation du couvercle 3, comme il sera décrit plus loin. Il est optionnellement prévu un épaulement externe du corps annulaire 20, permettant de relier cette face externe F22 à une face externe de la base qui peut présenter des échancrures ou fentes, distribuées par exemple dans les mêmes secteurs angulaires que les moyens de fixation MF1, ce qui peut aider à l'installation du joint J1 et/ou faciliter des déformations de matière dans des zones de la plaque P de boîtier sollicitées axialement par/depuis l'intérieur par les moyens de fixation MF1. Des méplats 29 ou autres reliefs facilitant une prise, optionnellement par un outil de serrage/desserrage, peuvent être distribuées en outre sur la face latérale de la base B qui est décalée radialement sur l'extérieur par rapport à la projection 23 grâce à l'épaulement externe du corps 20.

Dans l'exemple non limitatif des figures 2 et 7, on comprend qu'un premier joint J1 peut s'appuyer sur une zone annulaire de siège prévue sur le boîtier, autour de l'ouverture O, typiquement sans pénétrer intérieurement dans le boîtier. Ce joint J1 peut être un joint annulaire, par exemple en matériau élastomère, venant axialement en contact avec le boîtier, sur une face externe de ce dernier. On a illustré ici un ou plusieurs joints qui sont rapportés ou intégrés à l'élément de connexion 2, afin de réaliser notamment un contact annulaire étanche dans une zone périphérique située autour d'une circonférence de l'ouverture O, pour un contact d'étanchéité ici aux gaz. Par exemple, le joint J1 porté par la base B du corps 20 est sollicité axialement contre la plaque P du boîtier de batterie incluant l'ouverture O. Bien entendu, un joint pourrait aussi être monté directement sur la plaque P, par exemple sur une zone de gorge adaptée, au niveau de laquelle une action de serrage axial et/ou radial peut être exercée sur le joint par la base B, pour une configuration verrouillée à l'aide des moyens de fixation MF1.

En référence aux figures 1, 2, 4 et 6, le joint J1 peut être monté par serrage dans la gorge G1 annulaire prévue dans la base B de l'élément de connexion 2, le joint J1 appartenant à l'unité préassemblée du type par exemple montré sur les figures 1-2 et 6. L'ouverture O peut être circulaire ou de toute forme adaptée. L'agencement 1 forme un conduit, ici par l'élément de connexion 2. Le corps annulaire 20 délimite alors un canal C2 d'évacuation d'air communiquant via l'ouverture O avec l'intérieur du boîtier. Le boîtier peut lui-même renfermer des modules de batterie, de sorte que la plaque du boîtier P n'est pas en contact direct avec du liquide ou substance fluide intervenant dans des réactions d'électrochimie.

La base B peut correspondre à une extrémité annulaire du corps 20, à l'opposé du bord libre 21 annulaire de ce corps 20. L'agencement 1 est pourvu d'un couvercle 3 monté sur l'élément de connexion 2 et permettant d'obturer l'ouverture O, ici dans une position emboîtée dans laquelle un contact d'étanchéité C3 est réalisé, avec typiquement un chevauchement entre une jupe externe 33 du couvercle 3 et la projection annulaire 23 formée par le corps 20 à l'opposé de la base B. En raison de ce chevauchement, le bord libre 21 s'étend dans un volume intérieur V3 du couvercle, délimité par la jupe 33.

### Exemple de réalisation d'une fermeture étanche par le couvercle

L'élément de connexion 2 dont l'embase ou base B en une forme de douille permet la fixation au boîtier de batterie, peut former au-dessus de la base B une portée cylindrique ou autre forme tubulaire compatible avec la formation du contact d'étanchéité C3, annulaire. La projection annulaire 23 inclut ici une gorge externe G2 débouchant latéralement vers l'extérieur et dans laquelle s'étend un joint J2 annulaire qui peut être à base d'un matériau élastomère.

Le couvercle 3 peut être de conception simple, par exemple sans support ou relief de retenue d'un joint. Ici, le couvercle 3 présente une portion d'obturation 30 principale pouvant correspondre à une partie de fond, depuis laquelle s'étend une paroi latérale, tubulaire, formant une jupe 33 du couvercle 3.

En référence aux Figures 2, 5 et 8A, le couvercle 3 présente un élément de montage et guidage, par exemple sous forme d'une tige T, d'un conduit de type tige creuse 133 ou d'une partie de support 34 disposant d'une colonne centrale 34a, qui s'étend longitudinalement vers l'intérieur, depuis une région centrale de la portion d'obturation 30. Cet élément permet de pré-assembler l'unité de ventilation, en obtenant aisément une configuration du couvercle 3 avec le contact étanche C3, en limitant le risque d'agression ou déplacement du joint J2, grâce au guidage linéaire qui est ainsi permis. La projection annulaire 23 est ici de forme circulaire.

Comme visible sur la figure 2, la jupe 33 du couvercle 3 présente une face interne qui est plus épaisse à distance de son bord annulaire, ou en tout cas délimitant une circonférence intérieure qui varie pour un effet d'évasement, éventuellement en ayant un épaulement interne. Optionnellement, la jupe 33 comprend un rétrécissement dû à un bourrelet ou nervure N annulaire du couvercle 3, qui fait saillie radialement vers l'intérieur. Ceci permet un premier centrage de la jupe 33, sans frottement, lorsque le couvercle 3 commence à recouvrir la projection annulaire 23 en glissant via sa tige T ou 133 contre un guide complémentaire supporté par l'élément d'entretoisement 24. Ensuite le couvercle 3 est emboîté complètement pour obtenir le contact d'étanchéité C3, typiquement avec la ou les nervures N qui s'étendent au niveau ou plus bas que le joint J2.

### Maintien en position du couvercle

Le couvercle 3 peut être fixe par rapport à l'élément de connexion 2, en l'absence de ressort axial ou quelconque pièce autorisant un degré de liberté en translation ou rotation. La rotation est par exemple empêchée par le frottement du joint J2 et/ou l'action de pression, radialement vers l'intérieur, de la ou les nervures N. Dans certaines options, un effet anti-rotation est aussi procuré par l'action d'un organe de verrouillage 4 ou 104 typiquement rapporté sur le couvercle 3 et venant en prise sur une région de retenue prévue dans l'élément de connexion 2. Un tel organe 4, 104 permet en pratique d'empêcher un retrait accidentel du couvercle 3, par exemple en cas d'à-coup lorsque le boîtier de batterie est embarqué dans un véhicule motorisé. Dans la direction d'emboîtement du couvercle 3, un arrêt de ce dernier peut être permis lorsque des languettes L3 formées sur la jupe 33, en faisant saillie axialement à l'opposé de la partie d'obturation 30 transversale, viennent buter sur un épaulement externe annulaire de l'élément de connexion 2, comme visible par exemple sur la figure 1.

Indépendamment du fait de monter à l'avance ou non le couvercle 3 sur l'élément de connexion 2, il peut être prévu que le contact d'étanchéité C3 soit verrouillé avec une action de verrouillage impliquant une résistance supérieure à celle du frottement résultant du contact entre une face interne du couvercle 3 et le joint J2 ou organe/lèvre d'étanchéité similaire, ici rendu solidaire de la projection annulaire 23.

Plus généralement, un verrouillage de la position emboîtée du couvercle 3 est réalisé à l'aide d'un élément conçu séparément des moyens d'étanchéité J1 ou J2, typiquement qui ne joue aucun rôle dans l'obtention d'un contact d'étanchéité tout en bloquant axialement la position du couvercle 3. Ici, cet élément est sous forme d'un organe de verrouillage 4, 104 ou 204, de préférence réalisé d'une pièce déformable avec un effet ressort ou de rappel élastique vers une position de serrage qui s'exerce pour maintenir une partie du couvercle 3 au même niveau qu'un bord de prise BP prévu sur l'élément de connexion 2. Par exemple, l'organe de verrouillage 4, 104, 204 peut se présenter sous la forme d'une pince, d'un crochet en agrafe ou toute structure adaptée pour un serrage. Un accrochage le long d'une circonférence du corps annulaire 20 peut être réalisé en répartissant des zones de butée axiale dans au moins deux ou trois secteurs angulaires distincts, de préférence en utilisant une pièce commune pour réaliser ces contacts.

Dans une forme de réalisation, l'organe de verrouillage 4, 104 présente une symétrie par rapport à un plan médian, en délimitant une région d'enserrement avec contact, entre deux branches B1, B2 réparties de part et d'autre de ce plan de symétrie P4. Dans des variantes, l'organe de verrouillage est asymétrique et présente une branche plus déformable que l'autre et/ou qui est pliée intérieurement davantage (vers une zone centrale intérieure autour duquel s'étend cet organe) que l'autre branche. Sur les figures 8A et 8B, l'organe de verrouillage 204 présente une forme de O fendu d'un côté et peut se déformer radialement en s'éloignant ou en se rapprochant du fond de la gorge de support, ici une gorge continue annulaire, qui porte cet organe 204.

La position axiale d'emboîtement du couvercle 3, montrée sur la figure 1 ou sur la figure 6 peut être verrouillée dans un état préassemblé de l'unité de ventilation. Le couvercle 3 présente une tige T de guidage reçue dans un réceptacle tubulaire 26, ici central, de l'élément de connexion 2. Dans des options, une indexation en rotation du couvercle 3 par rapport au corps 20 est permise par le guidage de la tige T dans le réceptacle tubulaire 26 qui a une section de passage non circulaire. La tige T peut ainsi, par exemple, présenter des cannelures ou reliefs saillants complémentaires d'évidement longitudinaux placés en périphérie ou marge d'une section centrale du conduit du réceptacle 26, qui vont permettre de mettre en correspondance (dans des mêmes secteurs angulaires), des gorges 12 du corps 20 et, dans le couvercle 3, les évidements ou fenêtres 300 d'accès à ces gorges 12.

Bien que le réceptacle 25 soit montré ici en position centrale, traversé par l'axe central X, en étant porté par des rayons d'un dispositif d'entretoisement 24 qui sont répartis autour de cet axe X, d'autres dispositions du réceptacle 26 ou guide similaire pour l'emboîtement du couvercle sont utilisables, par exemple avec un décalage radial par rapport à l'axe X.

La tige T peut être plus longue/allongée suivant la hauteur (direction D1/D2) que la zone de chevauchement Z2. On facilite ainsi le montage en ayant une tige qui intervient au début du guidage/centrage du couvercle 3 par rapport au corps 20 de l'élément de connexion 2.

L'organe de verrouillage 4, 104, 204 est ici porté par le couvercle 3 et peut présenter une configuration plane, sans possibilité de translation parallèlement à l'axe central X par rapport au couvercle 3 après avoir été monté dans une région de support.

Une fois le couvercle 3 emboîté, avec le contact annulaire étanche C3 réalisé, l'organe de verrouillage 4, 104 peut entourer une zone de chevauchement Z2 ou Z2', visible par exemple sur la figure 2 ou la figure 6, entre l'élément de connexion 2 et le couvercle 3. La structure annulaire de cet organe 4, 104, ici non fermée avec deux branches B1, B2 ayant des terminaisons ou extrémités libres 41, 42, permet de placer l'organe de verrouillage 4,104 autour d'une région de support, appartenant au couvercle 3, qui est ajourée et évidée au moins partiellement.

En variante, l'organe de verrouillage 204 est entouré étroitement par une face interne du corps annulaire 20, pourvue de reliefs R3 formant des rebords de prise, pour un accrochage/retenue axiale du couvercle 3. L'organe 204 est par exemple logé dans un évidement en forme de gorge comme montré sur les figures 8A, 8B, cet évidement étant formé sur un anneau 34c d'une partie de support 34 intérieure, qui s'étend dans le canal C2 depuis la portion d'obturation 30.

La région de support peut être une région circonférentielle, de préférence avec au moins deux renfoncements, évidements, encoches, fenêtres ou zones de réception équivalentes formée extérieurement sur la région de support. En référence aux figures 1 à 6, la présence d'évidements ou fenêtres 300, 36 rend accessible une partie d'insertion formée dans l'élément de connexion 2, ici logée intérieurement par rapport au couvercle 3, ce qui permet à des portions rentrantes/saillantes vers l'intérieur de l'organe de verrouillage 4, 104 d'être insérées dans ces évidements ou fenêtres 300, 36 et de venir en prise contre au moins une surface S32 de butée axiale appartenant à l'élément de connexion 2. La surface S32 peut correspondre à la délimitation d'une entaille, une gorge, résultant d'une structure à reliefs et/ou changement de section prévue sur l'élément de connexion, au niveau de la zone de chevauchement Z.

Dans ce type d'option, on comprend que l'organe de verrouillage 4, 104, retenu axialement par le couvercle 3 (par exemple par blocage entre des délimitations axiales du ou des évidements/fenêtres 36, 300) peut s'engager alors sous un rebord ou bord de prise BP prévu sur l'élément de connexion 2, ce qui suffit à prévenir le retrait du couvercle 3 et verrouiller la position emboîtée de ce couvercle 3.

### Déverrouillage pour libérer l'ouverture

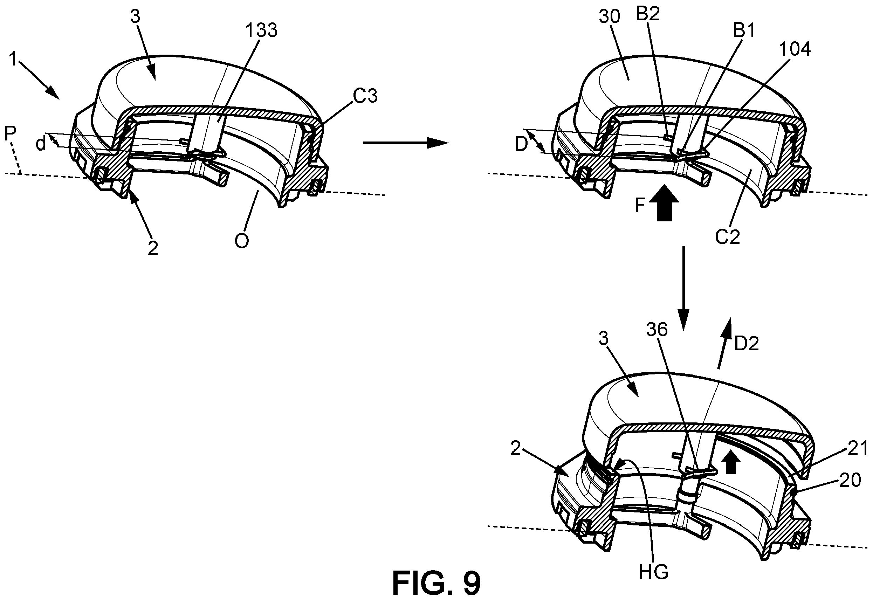

L'organe de verrouillage 4, 104, 204 présente une déformabilité pouvant permettre de relâcher le serrage de l'élément de connexion 2, lorsque le couvercle 3 est soumis à une poussée importante des gaz, qui sont par exemple des gaz chauds HG présents à l'intérieur du boîtier de batterie. En référence aux figures 5 et 9, on peut voir que l'organe de verrouillage 104 sous forme d'agrafe permet le serrage uniquement lorsque la force de rappel élastique des branches B1, B2 suffit à établir une prise sous le collet 100 ou autre relief de retenue adapté prévu sur un guide du couvercle 3.

Lorsque la surpression du côté de l'air/gaz présent dans le canal d'évacuation C2 dépasse un seuil, l'une au moins des deux branches B1, B2 va s'écarter de l'autre, de sorte que l'écartement ou distance D entre les extrémités 41, 42 de l'organe de verrouillage 104 va être agrandi par rapport à la distance d nominale correspondant à la configuration habituelle de l'organe de verrouillage 104. Cet écartement D est suffisant pour que l'effet de butée axiale contre le bord de prise BP ne suffise plus à bloquer le couvercle 3 qui est repoussé suivant la direction D2 (visible sur la figure 9 et correspondant à un mouvement d'écartement du couvercle 3 par rapport à la plaque P du boîtier où est prévue l'ouverture O.

Une forme sensiblement circulaire fendue de l'organe de verrouillage 204 peut être aussi utilisée, sans partie intermédiaire raccordant deux branches. Dans ce cas, une déformation par débattement radial reste possible avec la liberté de mouvement permise par écartement, au niveau de la fente (voir l'écartement, O4' sur la figure 8A) entre les extrémités 41, 42 de l'organe de verrouillage 204.

On décrit à présent des modes de réalisation utilisant un organe 4, 104 de verrouillage en position du couvercle, qui peut correspondre à une agrafe pourvue de deux branches B1, B2 pour permettre un enserrement. Les deux branches B1, B2 sont par exemple reliées à une même portion intermédiaire 40 et la mise en place de l'organe 4, 104, typiquement réalisé en seule pièce, peut être rapide.

### Premier exemple d'intégration de l'organe de verrouillage

On décrit à présent plus en détail un premier mode de réalisation de l'agencement, en référence aux figures 1 à 4. Ici l'organe de verrouillage 4 est monté sur le pourtour du couvercle 3, par exemple autour de la jupe 33. L'organe 4 présente une forme générale de U ou de C. Une forme de l'organe 4 avec une boucle complète est également permise, dans certaines options, dans la mesure où une déformation est possible entre deux tronçons ou branches B1, B2 de l'organe 4.

Sur les figures 2 et 3, on voit que l'organe de verrouillage 4 entoure une zone de chevauchement Z2 entre l'élément de connexion 2 et le couvercle 3. La région de support/fixation, formée dans la jupe 33, entoure la projection annulaire 23 qui constitue une portion d'insertion le long d'une face interne de la jupe 33, dans le volume intérieur V3 du couvercle 3. La projection annulaire 23 s'insère linéairement dans la portion tubulaire/jupe 33 qui est pourvue d'au moins une entaille ou fenêtre 300 pour retenir des portions rentrantes de l'organe de verrouillage 4. Cette retenue s'effectue au même niveau de hauteur que des gorges 12 externes de la projection 23, pour la position emboîtée du couvercle 3. En vue en coupe transversale et comme visible notamment sur la figure 3, l'organe de verrouillage 4 peut présenter une circonférence intérieure qui suit généralement la géométrie, ici généralement circulaire, d'une face externe latérale du couvercle 3 avec éventuellement un décalage radial vers l'extérieur. Cependant, en plusieurs endroits, l'organe de verrouillage 4 présente des segments d'engagement 4a, 4b, 4c qui sont décalés vers l'intérieur et aptes à venir en contact contre une surface S32 de retenue située du côté intérieur par rapport à la jupe 33.

Comme dans l'exemple non limitatif des figures 1 à 3, au moins un des segments d'engagement peut être délimité entre deux portions à angle rentrant (sur la circonférence de l'organe 4) ou portions pliées similairement vers l'intérieur. Ici, comme visible sur la figure 3, il est prévu une structure d'agrafe avec une portion intermédiaire 40 qui constitue ou inclut un premier segment d'engagement 4a apte à pénétrer dans une des gorges externes ou relief en creux similaire de la projection annulaire 23. Les deux branches B1, B2 reliées à cette portion intermédiaire 40 sont arquées et présentent chacune un autre segment d'engagement, par exemple aussi délimité par deux angles rentrants. On peut ainsi prévoir un premier segment d'engagement 4a situé à l'opposé des extrémités libres 41, 42 de l'agrafe formant l'organe de verrouillage 4, et des deuxième et troisièmes segments 4b, 4c participant à l'action de serrage avec enserrement de la projection annulaire 23.

Comme les gorges 12 correspondent ici à des entailles extérieures délimitées axialement entre deux rebords, sur la face externe de la projection annulaire 23, il est formé un bord de prise BP formant une butée axiale pour s'opposer au retrait du couvercle 3 emboîté autour de cette projection 23 lorsque tous les segments d'engagement sont insérés sous le ou les bords de prise BP correspondant(s). L'organe de verrouillage 4 peut présenter une structure de brin métallique ou en tout matériau de rigidité comparable à l'acier, de sorte qu'il est élastiquement déformable de façon à pouvoir présenter une variation dans l'écartement entre les branches B1, B2, donc une variation dans sa configuration de serrage, qui peut être plus relâchée, de préférence sans pour autant se désengager de la région de support/fixation.

Autrement dit, l'organe de verrouillage 4 est flexible et peut passer d'une configuration de serrage à une configuration plus lâche afin qu'un ou plusieurs des segments d'engagement 4a, 4b, 4c ne soit plus en contact avec l'élément de connexion 2, tout en restant supporté par le couvercle 2. En cas de surpression sous le couvercle 3, on comprend que l'effort de traction concentré au niveau de la zone de contact avec le ou les bords de prise BP va dépasser un seuil pour surmonter la force de rappel élastique exercée vers l'intérieur sur ces segments d'engagement 4a, 4b, 4c, de sorte qu'un écartement (voir aussi la figure 9 avec le cas d'une autre structure d'agrafe) des branches B1, B2 sera obtenu par simple déformation de l'organe 4, qui est plus aisément déformable que le corps 20 rigide ou le couvercle 3 rigide.

Bien que cet exemple montre une région de support généralement annulaire appartenant au couvercle 3, ajourée et évidée au moins partiellement pour la réception des segments d'engagement 4a, 4b, 4c de l'organe qui entoure cette région de support, d'autres réalisations sont permises pour la fonction de support de l'organe de verrouillage. Par exemple, tout ou partie de la région de support peut être formé dans un volume intérieur V3 du couvercle 3 ou il peut être prévu un entrelacement entre le couvercle 3 et un ou plusieurs organe(s) de verrouillage dans certaines variantes, tout en utilisant des segments d'engagement mobiles radialement vers l'extérieur.

La structure annulaire de cet organe 4, ici non fermée avec deux branches B1, B2 ayant des terminaisons ou extrémités libres 41, 42, permet de placer l'organe de verrouillage 4 autour du couvercle 3 sans interférence avec l'obtention du contact d'étanchéité C3, qui peut être situé axialement plus loin de l'ouverture O que ne l'est la région de support où se monte l'organe 4.

Dans une variante, deux organes de verrouillage séparés l'un de l'autre peuvent participer à l'effet d'enserrement. Par exemple, chacun des deux organes peut avoir un débattement radial, du fait d'une déformation élastique, par rapport à une zone de pivot où l'organe est solidarisé au couvercle 3. On peut par exemple avoir deux branches B1, B2 réalisées sous forme de parties de verrouillage séparées, sans partie intermédiaire 40 commune.

### Deuxième exemple d'intégration de l'organe de verrouillage

En référence à présent aux figures 5, 6 et 9, on décrit un agencement 1 de ventilation de conception légèrement différente, en conservant le principe d'un verrouillage du couvercle 3 qui empêche ce dernier de s'éloigner de l'ouverture O, de sorte qu'un contact d'étanchéité annulaire C3 peut être conservé dans des conditions normales de fonctionnement du boîtier de batterie. En cas d'emballement thermique et/ou de conditions anormales amenant à une surpression dans le canal C2, l'organe de verrouillage 104 peut rester solidaire du couvercle 3, en restant engagé dans des évidements latéraux d'une tige 133 du couvercle 3, ici conçue comme une tige creuse.

L'élément de connexion 2 peut être similaire ou identique à celui de la figure 4, à l'exception notable de la présence d'un relief formant un bord de prise BP sur le guide central qui s'étend dans le canal C2. Ici le relief correspond au bord annulaire inférieur d'un collet 100 prévu sur le guide central. Dans cet exemple de la figure 5, le guide est conçu en tant que tige ou portion d'insertion 123 similaire, qui s'engage en coulissement longitudinal dans un creux de la tige 133 du couvercle 3. Il est créé ici une zone de chevauchement Z2' proche de l'axe X, lorsque la tige creuse 133 entoure la portion d'insertion 123.

L'organe de verrouillage 104 est représenté dans une position transverse/perpendiculaire par rapport à l'axe central X aligné avec une portion d'insertion prévue dans l'élément de connexion 2 pour guider et centrer le couvercle 3, par exemple avant même son emboîtement autour du joint J2. Plus généralement, l'organe de verrouillage 104 peut prendre la forme d'une agrafe ou pièce analogue de taille réduite, pouvant être entièrement logée à l'intérieur du volume interne V3 du couvercle 3. Cet organe 104 se monte autour de la zone de chevauchement Z2'.

Comme visible sur la figure 5, l'organe de verrouillage 104 entoure la tige creuse 133 et est maintenu axialement dans une position fixe par rapport à cette tige, tout en conservant une faculté à se déformer, dans un plan transversal à la tige 133. L'organe 104 présente deux branches B1, B2 permettant de le solidariser à la tige creuse 133, sur l'extérieur de cette tige au niveau des fentes ou fenêtres 36 percées radialement dans la paroi de la tige 1331. Ici, l'organe de verrouillage 104 présente des branches réparties de part et d'autre d'une portion intermédiaire 40 qui s'étend à l'opposé de l'ouverture d'accès O4 par laquelle la tige 133 s'insère entre les deux branches B1, B2. Les deux branches B1, B2 et la portion intermédiaire 40 s'étendent dans un même plan qui correspond au plan dans lequel peut se déformer l'organe de verrouillage 104. L'organe 104 enserre la portion de la tige creuse 133 au niveau de la zone de chevauchement Z2', par exemple à une distance de quelques millimètres d'un bord inférieur de la tige creuse 133, optionnellement au-dessus d'une extrémité basse en forme d'anneau ou disque comme visible sur la figure 6.

La déformation par écartement des deux branches B1, B2 est obtenue lors de la mise en place de l'organe 104, ici en forme d'agrafe en U, autour de la tige 133, sachant que la section de la tige est de plus grande largeur que l'écartement entre les deux branches, sauf au niveau d'une paire de fenêtres 36 qui sont diamétralement opposées sur la tige creuse 133. Ces fenêtres 36 sont ainsi agencées en parallèle. La force de rappel élastique permet un resserrement des branches B1, B2 lorsque l'agrafe formant l'organe 104 est orientée suivant une direction parallèle aux fenêtres 36, avec les branches B1,B2 qui s'insèrent chacune dans l'évidement correspondant d'une fenêtre 36.

Les fenêtres 36 peuvent faire communiquer le creux central (de la tige 133) radialement avec le reste du volume interne V3 du couvercle 3. L'organe de verrouillage 104 a une forme générale de U avec des branches B1, B2 ayant entre elles un écartement par défaut qui dépend de la longueur de la portion intermédiaire 40 qui s'étend transversalement, perpendiculairement dans cette option, à ces deux branches B1, B2. Un angle proche ou égal à 90° peut être prévu à la jonction entre chaque branche B1, B2 et la portion intermédiaire 40. Les extrémités de l'agrafe/organe 104 peuvent s'écarter/diverger aux extrémités 41, 42, ce qui facilite/guide l'engagement de la tige 133 dans la zone centrale de serrage de cet organe 104, entre les deux branches B1, B2.

Le matériau, ici filaire et typiquement métallique, de l'organe de verrouillage 104 permet une déformation par écartement modifié entre les branches, l'angle avec les branches B1, B2 pouvant augmenter en réponse à l'insertion d'un élément de section dont le diamètre (ou dimension caractéristique équivalente) est plus grand que l'écartement nominal entre les branches.

Le montage du couvercle 3, ici pourvu d'une tige creuse 133, peut être complètement analogue au premier exemple d'intégration, par exemple avec le même type de guidage à la fois sur un guide central de l'élément de connexion 2 et le long de la projection annulaire 23. Cependant, l'emboîtement du couvercle 3 peut être réalisé avec une rotation relative entre le couvercle 3 et la portion d'insertion 123, au moins au début du guidage. Cette absence d'indexation en rotation peut constituer un avantage lors du montage, en vue d'augmenter la cadence de production d'unités de ventilation préassemblées.

Ici, la venue en prise de l'organe de verrouillage 104 sous le collet 100 se fait naturellement à la fin du coulissement de la portion d'insertion 123 dans le creux de la tige 133, l'organe 104 se déformant par écartement des branches B1, B2 au contact avec la face externe latérale du collet 100 puis se resserrant aussitôt que les branches B1, B2 parviennent au niveau de la gorge située sous ce collet 100. On peut prévoir seulement deux segments d'engagement 104b, 104c aptes à venir en contact sous le ou les bords de prise BP. Le couvercle 3 est alors verrouillé axialement :
- sans pouvoir coulisser davantage en raison de la surface annulaire de butée/épaulement qui est déjà en contact avec les languettes L3, et
- sans pouvoir remonter compte tenu de la force de rappel qui maintient les branches B1, B2 dans la gorge, sous la face basse du collet 100.

Bien entendu, le nombre de segments d'engagement/contact peut varier selon la géométrie retenue pour l'organe de verrouillage 104, en conservant une fonction de serrage, de préférence avec des propriétés de déformation réversible facilitant un desserrement radial à l'emboîtement, un resserrement radial pour le verrouillage et à nouveau un desserrement radial pour le déverrouillage.

En lieu et place d'une structure d'agrafe, en une seule pièce, on peut réaliser des moyens de verrouillage équivalents résultant d'un assemblage de parties complémentaires ou encore utiliser deux branches B1, B2 séparées et reliées rigidement à la tige creuse 133 ou autre région de support dans le couvercle 3, de façon à pouvoir présenter un débattement radial en cas de sollicitation/surpression sous le couvercle au-delà d'un seuil. Plus généralement, l'organe de verrouillage 104 peut présenter toute structure à deux parties ou branches B1, B2 en fournissant une force de rappel d'au moins une des branches vers l'autre.

Bien entendu, l'organe de verrouillage 4, 104 peut présenter différentes géométries, tout en étant réalisé typiquement d'une seule pièce. Une agrafe de structure filaire ou un circlip de verrouillage peuvent convenir pour forme un organe de verrouillage qui présente une région resserrée entre deux branches B1, B2, avec ou sans serrage complémentaire par au moins une portion intermédiaire 40 de l'organe 4 qui se situe à l'opposé des extrémités 41, 42 de la pièce.

Dans d'autres options moins préférées, l'organe de verrouillage 104 peut présenter une position centrale en étant entouré par la zone de chevauchement Z2'. Par exemple, en variante au cas de la figure 5, l'agrafe pourrait se placer dans des fenêtres 36 par l'intérieur en étant introduit dans la tige creuse 133 depuis l'extérieur de couvercle 3 (qui présente un débouché supérieur du creux de la tige 133), en présentant des segments d'engagement venant serrer par l'intérieur un tube formant le guide central de l'élément de connexion 2. Dans ce cas, la tige creuse 133 est insérée comme un organe mâle dans le guide femelle porté par le dispositif d'entretoisement 24.

### Troisième exemple d'intégration de l'organe de verrouillage

En référence aux figures 8A et 8B, il est présenté un agencement 1 de ventilation analogue au cas illustrés dans les figures précédentes, avec le même genre de fixation par sa base ou partie basse de l'élément de connexion qui délimite le canal C2 d'évacuation d'air présent dans le boîtier de batterie. L'élément de connexion 2 ne sera ainsi pas décrit à nouveau. Le même principe d'un verrouillage du couvercle 3, maintenu axialement pour conserver le contact d'étanchéité annulaire C3, est utilisé. Il peut être obtenu une zone de chevauchement Z2" autour de la portion d'insertion/projection de l'élément de connexion 2. Dans cet exemple, on retrouve un joint J1 annulaire placé plus bas que le couvercle 3 ainsi qu'un joint J2 (éventuellement de type à section en X comme vu en coupe) placé extérieurement sur le corps du connecteur pour le contact C3 dans les conditions normales de fonctionnement du boîtier de batterie. En cas d'emballement thermique et/ou de conditions anormales amenant à une surpression dans le canal C2, l'organe de verrouillage 204 peut rester solidaire du couvercle 3, en restant engagé dans un évidement latéral en forme de gorge circonférentielle prévu dans la partie de support 34, ici conçue comme une extension centrale intérieure connectée à la partie d'obturation 30.

Dans cet exemple, à la différence de la structure de la figure 5, la région de support de l'organe de verrouillage 204 s'écarte de la zone de tige ou colonne centrale 34a et c'est le couvercle 3 qui présente un dispositif d'entretoisement, ce qui permet (ici par les entretoises 34b) de réaliser une gorge qui est en vis-à-vis d'une face interne de la jupe 33 du couvercle. Il est ainsi créé un espace annulaire de réception de la projection annulaire portant le joint J2, cet espace annulaire étant délimité :
- intérieurement par un anneau 34c périphérique de la partie de support 34, supporté via les entretoises 34b et la colonne 34a ;
- et extérieurement, par la face interne de la jupe 33.

L'organe de verrouillage 204 est sous la forme d'une pièce plate, qui remplit la gorge externe prévue sur la circonférence externe de l'anneau 34c. Avec une forme annulaire dans un plan perpendiculaire à l'axe central X, l'organe de verrouillage 204 s'étend dans l'espace annulaire tout en laissant un passage annulaire pour la projection 23 formant la portion d'insertion de l'élément de connexion 2. Sur la figure 8A, on, peut voir que les reliefs R3 s'étendent à une distance radiale D32 de l'axe central X coïncidant ici avec un axe de symétrie du couvercle. La partie de support 34 présente une face latérale externe, prévue sur l'anneau 34c dans cet exemple non limitatif, qui s'étend à une distance radiale D31 de l'axe central X qui est légèrement inférieure à la distance radiale D32.

Dans sa conformation non contractée, l'organe de verrouillage 204 occupe un espace annulaire, radialement entre la face externe latérale de la partie de de support 34 et la face interne du corps 20, en s'étendant au-delà de la distance D31 pour présenter une circonférence externe qui longe la face interne du corps 20, par exemple sur plus de 80 ou 90% de la circonférence de ce corps 20. L'organe de verrouillage 204 présente une section ronde ou autre section adaptée pour se rétrécir en se rapprochant de la face interne du corps annulaire 20, et pour se rétrécir également du côté du fond de la gorge de l'anneau 34c. On a illustré un anneau 34c relativement plat. Cependant, dans des variantes, l'organe 204 peut être porté par une portion tubulaire plus allongée, ce qui peut éventuellement permettre de supprimer la colonne 34a.

Avec ce type de structure du couvercle 3, il est permis d'appuyer radialement vers l'intérieur sur le joint J2 (par la jupe 33), tout en disposant d'une agrafe ou organe de verrouillage 204 similaire, rapportée sur l'anneau 34c formant la région de support, qui est apte à venir en prise axialement contre un ou plusieurs reliefs R3 internes de l'élément de connexion 2. L'organe de verrouillage 204 peut être sous forme d'une pièce métallique ou autre matériau plus rigide que le ou les joints J1, J2, déformé et déplacé radialement vers l'intérieur lors de la mise en place du couvercle 3 par emboîtement, par exemple en étant localement poussé/comprimé par les reliefs R3 saillants distribués régulièrement/dans des secteurs angulaires distincts autour de l'anneau 34c. Ceci peut provoquer un léger changement de conformation, plus compacte, avec les extrémités 41, 42 qui se rapprochent en réduisant l'écartement ou fente O4'.

Lorsque le couvercle 3 est mis en place avec l'obtention du contact étanche C3, l'organe de verrouillage 204 se situe juste sous les reliefs R3, de sorte que par effet de rappel élastique ou rappel vers une géométrie par défaut, l'organe de verrouillage 204 reprend sa forme/conformation initiale et peut s'engager axialement sous les reliefs R3. Le verrouillage du couvercle 3 est réalisé, typiquement avec des contacts contre l'élément de connexion 2 distribués dans plusieurs tronçons ou segments d'engagement (ici des tronçons courbes, éventuellement sans rupture de courbure dans la pièce annulaire/circulaire et fendue constituant l'organe 204). La ventilation en situation d'urgence est permise par l'aptitude de l'organe de verrouillage 204, qui est réversiblement déformable, à pouvoir prendre à nouveau une conformation plus compacte si l'effort exercé sur le couvercle 3 dépasse un seuil pour permettre cette déformation.

Dans cet exemple, on comprend que la déformation peut être répartie sur l'essentiel de la longueur de l'organe de verrouillage 204 : il ne s'agit pas d'une déformation localisée, pouvant correspondre à un pliage. La déformation permettant la ventilation par déplacement du couvercle 3 correspond ici plutôt à une contraction et c'est la force de rappel élastique, ici radialement vers l'extérieur, de l'organe de verrouillage 204 qui permet de garantir le verrouillage.

### Exemple de fonctionnement et applications de l'agencement de ventilation

L'ouverture O peut être rendue accessible, par retrait du couvercle 3 qui se déboîte de la douille constituant l'élément de connexion, dès que la pression du côté intérieur (côté du volume interne du boîtier de batterie) dépasse un seuil. Une pression importante correspond à une force de déplacement exercée sur la portion d'obturation 30, transversale, qui entraîne aussitôt (par un effet de traction) la portion tubulaire (porteuse de l'agrafe/organe 4, 104, 204) suivant la direction/sens D2 montré sur la figure 7. Dans les deux premiers modes de réalisation, le retrait du couvercle 3 se produit dès que l'organe de verrouillage 4, 104 commence à se déformer radialement vers l'extérieur, en écartant l'une de l'autre les deux branches de serrage de l'agrafe (éventuellement avec un agrandissement de l'écartement/ouverture O4 comme dans le cas des figures 5 et 9). Selon le troisième mode de réalisation illustré sur les figures 8A et 8B, le retrait du couvercle 3 se produit dès que l'organe de verrouillage 204 commence à se déformer radialement vers l'intérieur, en se contractant radialement, typiquement avec une réduction de l'espacement O4'.

En référence à la figure 9, on peut voir que l'organe verrouillage 104 peut se déformer par un écartement pour obtenir le grand écartement D qui a typiquement déjà été obtenu pour la mise en place du couvercle 3 par emboîtement. Le même principe s'applique par exemple avec la structure des figures 1 et 2, sachant que l'agrafe 4 a déjà été déformée une fois avec un grand écartement avant d'occuper sa position de verrouillage, correspondant à une position de l'organe 4 compatible avec un écartement comparativement plus petit entre les branches B1, B2, permettant de venir dans un logement, évidement ou gorge 12.

Un retour à la configuration de plus grand écartement D est facilité par le caractère circulaire ou continûment courbé (sans aspérité susceptible d'ajouter un effet de retenue), comme vu en coupe transversale (voir par exemple sur la droite de la figure 2), du fil ou brin pouvant constituer l'organe de verrouillage 4, 104. Dans certaines options, cette absence d'aspérité peut se rencontrer uniquement dans les segments d'engagement 4a, 4b, 4c.

Pour une agrafe ou organe de verrouillage relativement petite, dont la plus largeur ou dimension caractéristique similaire entre les branches B1, B2 est inférieure à un cinquième de la largeur ou diamètre du couvercle 3, la déformation peut être relativement faible, d'où une limitation du recouvrement/extension sous le rebord de prise BP lors du verrouillage, par exemple sans excéder quelques millimètres au niveau des segments d'engagement 4a, 4b, 4c.

Dans le cas de la figure 8A, seules quelques portions ou segments de l'organe 204 annulaire sont engagés axialement contre des reliefs R3 espacés les uns des autres, du fait de la force de rappel radiale vers l'extérieur. La déformation peut être aussi relativement faible.

Plus généralement, l'insertion des segments d'engagement 4a, 4b, 4c peut être limitée pour correspondre à une extension radiale de chevauchement inférieure à 4 ou 5 mm. Par exemple un recouvrement radial de l'ordre de 2 mm pour chaque segment d'engagement, par rapport à une surface de butée axiale correspondante de l'élément de connexion 2, peut être suffisante tout en permettant le désengagement par déformation élastique, le cas échéant combiné à un effet de dilatation en cas de gaz chauds HG présents dans le canal C2. Ces valeurs peuvent cependant varier en fonction de la structure et la taille de l'organe de verrouillage 4, 104, 204. Un plus grand organe de verrouillage 4 qui entoure le couvercle 3, comme dans le cas illustré sur les figures 1 à 3, peut se déformer davantage qu'une agrafe comparativement plus petite telle que montré sur les figures 5 et 6, ce qui permet un recouvrement radial plus important.

La remontée du couvercle 3, visible sur la figure 9 par exemple, est permise sous l'effet combiné de l'augmentation de pression et de la déformation/écartement des branches B1, B2. Plus la pression augmente, plus l'effort augmente également au niveau des segments d'engagement 4a, 4b, 4c qui peuvent reprendre l'effort axial. L'agrafe ou organe 104 étant souple, au fur et à mesure de l'augmentation de la pression, il ne va plus crocheter/s'intercaler sous le rebord de prise BP : le couvercle 3 va donc être éjecté suivant la direction D2. L'agencement 1 constitue ainsi un dispositif de mise à l'air libre qui permet l'éjection du couvercle 3 seulement dans des conditions particulières, de simples vibrations ne suffisant pas à déformer tous les segments d'engagement 4a, 4b, 4c dans une direction centrifuge, ou tout du moins écarter suffisamment les branches B1, B2.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple plusieurs organes de verrouillage peuvent être utilisés, éventuellement en cumulant les organes de type agrafe 4 et 104. Dans une option, l'agencement 1 inclut l'un de ces organes, plus facilement déformable, qui autorise un premier coulissement limité du couvercle 3 en direction opposée à la base B pour un premier seuil de surpression, et l'autre organe qui se déforme à son tour au-delà d'un deuxième seuil si la surpression interne reste trop importante. Par exemple, une petite agrafe 104 se déforme à un premier seuil et une agrafe 4 plus large peut se déformer à son tour pour une surpression comparativement plus importante. Dans une telle option, l'élément de connexion 2 peut présenter deux régions annulaires bien distinctes où sont prévus au moins un bord de prise BP, comme illustré dans le cas non limitatif de la figure 5 : au moins un bord de prise BP est formé par la surface inférieur du collet 100 et au moins un autre bord ou rebord BP est formé sur le corps annulaire 20.

Par ailleurs, l'expression boîtier de batterie doit être comprise dans un sens général, le boîtier pouvant renfermer un ou plusieurs groupes d'accumulateurs aptes à fournir une énergie sous forme électrique ou énergie exploitable sous une quelconque forme pour une conversion en énergie électrique.

La paroi de boîtier P incluant l'ouverture O peut présenter n'importe quelle orientation. Bien que l'exemple non limitatif de la figure 7 correspond à une orientation de cette plaque P dans un plan généralement horizontal pour disposer d'un couvercle 3 surmontant axialement (par le dessus) l'élément de connexion 2, de sorte que l'axe X est ici vertical, d'autres dispositions sont permises, notamment avec une unité de ventilation montée latéralement sur le boîtier de batterie.

## Revendications

1. Agencement (1) de ventilation pour boîtier de batterie, en particulier comprenant une ou plusieurs batteries, l'agencement (1) comprenant :
- un élément de connexion (2) apte à se monter dans une ouverture du boîtier (O), l'élément de connexion (2) présentant un corps annulaire (20) s'étendant autour d'un axe central (X) et apte à délimiter un canal (C2) d'évacuation d'air présent à l'intérieur du boîtier, le corps annulaire (20) présentant une base annulaire (B) permettant une retenue axiale contre le boîtier, directement ou par l'intermédiaire d'un joint annulaire (J1), le corps annulaire (20) présentant un bord libre (21) distal du boîtier, opposé à la base (B);
- un couvercle (3) d'obturation du canal, le couvercle (3) se montant sur le corps annulaire (20) par emboîtement suivant une direction de rapprochement vers la base (B), le couvercle (3) comprenant une portion d'obturation (30), s'étendant transversalement par rapport à l'axe central (X);
- des moyens d'étanchéité (J2) pour permettre de réaliser un contact annulaire étanche (C3) entre le couvercle (3) et le corps annulaire (20) ; et
- au moins un organe de verrouillage (4 ; 104 ; 204) verrouillant une position axiale d'emboîtement du couvercle (3) pour laquelle le contact annulaire étanche (C3) est réalisé; dans lequel ledit organe de verrouillage (4 ; 104 ; 204), de préférence de forme annulaire, longe et/ou entoure, sur plus d'une demi circonférence, l'un au moins parmi l'élément de connexion (2) et une portion tubulaire du couvercle (3), en venant en prise contre au moins une surface de butée axiale appartenant à l'élément de connexion (2),
et dans lequel ledit organe de verrouillage (4 ; 104 ; 204), qui est distinct du couvercle (3), de l'élément de connexion (2) et des moyens d'étanchéité (J2), est déformable pour déverrouiller l'emboîtement du couvercle (3) lorsque la surpression du côté de l'air présent dans le canal d'évacuation (C2) dépasse un seuil.

2. Agencement selon la revendication 1, dans lequel ledit organe de verrouillage (4 ; 104 ; 204) entoure ou est entouré par une zone de chevauchement (Z2 ; Z2' ; Z2") entre l'élément de connexion (2) et le couvercle (3).

3. Agencement selon la revendication 1 ou 2, dans lequel l'organe de verrouillage (4 ; 104 ; 204) s'étend de façon annulaire autour de l'axe central (X), l'organe de verrouillage consistant de préférence en une pièce déformable par modification d'un espacement entre deux extrémités de cette pièce qui sont voisines l'une de l'autre.

4. Agencement selon l'une quelconque des revendications précédentes, dans lequel l'organe de verrouillage (4 ; 104 ; 204) est supporté par le couvercle (3).

5. Agencement selon l'une quelconque des revendications précédentes, dans lequel l'au moins un organe de verrouillage (4 ; 104) consiste en une agrafe qui présente deux branches d'enserrement (B1, B2) reliées à une même portion intermédiaire (40).

6. Agencement selon la revendication 4 prise seule ou en combinaison avec la revendication 5, dans lequel le couvercle (3) présente en outre une portion tubulaire (33 ; 133) apte à loger une portion d'insertion (23 ; 123) prévue dans l'élément de connexion (2), et dans lequel :
- l'organe de verrouillage (4 ; 104), supporté par la portion tubulaire (33 ; 133), est adapté pour venir s'engager, de préférence par le dessous, contre un bord de prise (BP) appartenant à la portion d'insertion (23 ; 123) pour verrouiller la position axiale d'emboîtement du couvercle (3), ce verrouillage étant réalisable uniquement dans une position de chevauchement de la portion tubulaire (33 ; 133) autour de la portion d'insertion (23 ; 123) ; et
- l'organe de verrouillage (4 ; 104) s'étend ou s'insère dans au moins un évidement ou fenêtre (36 ; 300) de la portion tubulaire (33) afin d'exercer une action de serrage contre la portion d'insertion (23 ; 123), l'organe de verrouillage (4 ; 104) étant élastiquement déformable par déformation radiale vers l'extérieur.

7. Agencement selon la revendication 6, dans lequel l'organe de verrouillage (4 ; 104) est réalisé d'une seule pièce apte à enserrer la portion d'insertion (23 ; 123) au travers de la portion tubulaire (33 ; 133).

8. Agencement selon la revendication 6 ou 7, dans lequel la portion d'insertion (123) est une tige de guidage qui s'insère linéairement dans la portion tubulaire (133) conçue en tant que tige creuse, pourvue d'au moins une entaille ou fenêtre (36) de réception d'un segment d'engagement (104b , 104c) appartenant à l'organe de verrouillage (104).

9. Agencement selon la revendication 6 ou 7, dans lequel la portion d'insertion (23) est une projection annulaire, axialement saillante depuis la base (B), qui s'insère linéairement dans la portion tubulaire (33) conçue en tant que jupe du couvercle (3), pourvue d'au moins une entaille ou fenêtre (300) de réception d'un segment d'engagement (4a, 4b, 4c) appartenant à l'organe de verrouillage (4).

10. Agencement selon l'une quelconque des revendications précédentes, dans lequel l'élément de connexion (2) présente un bord prise (BP) de forme annulaire et/ou distribué dans au moins deux tronçons espacés l'un de l'autre, ledit bord de prise (BP) s'étendant dans une région annulaire concentrique par rapport à une région de support annulaire entourant ce bord de prise, la région de support annulaire appartenant au couvercle (3) pour supporter l'organe de verrouillage (4 ; 104),
et dans lequel l'organe de verrouillage (4 ; 104) est maintenu solidaire du couvercle (3) par la région de support annulaire, aussi bien dans une première configuration d'enserrement avec contact contre l'élément de connexion (2) que dans une deuxième configuration d'enserrement, plus lâche que la première configuration d'enserrement et compatible avec un désemboîtement du couvercle (3) par rapport au corps annulaire (20).

11. Agencement selon l'une quelconque des revendications 1 à 4, dans lequel le couvercle (3) présente en outre une partie de support (34) reliée, de préférence axialement, à la portion d'obturation (30), pour porter l'organe de verrouillage (204) qui s'étend de façon annulaire en longeant circonférentiellement une face interne du corps annulaire (20),
et dans lequel l'organe de verrouillage (204) permet de retenir axialement le couvercle (3) dans la position d'emboîtement en venant en prise contre au moins un relief interne (R3) inclus dans ladite face interne du corps annulaire (20), qui est de préférence réalisé d'une seule pièce en matériau rigide.

12. Agencement selon l'une quelconque des revendications précédentes, dans lequel l'élément de connexion (2) est réalisé d'une seule pièce et porte deux joints annulaires d'étanchéité, à savoir :
- un premier joint (J1), de préférence logé dans une gorge intérieure (G1) de la base (B) qui débouche axialement à l'opposé de la portion d'obturation (30), afin de réaliser une étanchéité annulaire avec le boîtier (P) ; et
- un deuxième joint (J2), de préférence logé dans une gorge extérieure circonférentielle (G2), pour obtenir une étanchéité annulaire avec le couvercle (3).

13. Utilisation d'un organe déformable (4; 104 ; 204) pour verrouiller l'emboîtement d'un couvercle (3) afin d'obturer une ouverture (O) prévue dans un boîtier de batterie (P), en particulier comprenant une ou plusieurs batteries, tout en permettant une ventilation d'urgence en cas de surpression d'air dans le boîtier, **caractérisée en ce que** l'organe déformable (4 ; 104 ; 204) est disposé pour entrer en prise contre une surface de butée axiale appartenant à un élément de connexion (2) formant un canal (C2) d'évacuation d'air obturé par le couvercle (3), avec la particularité que :
- l'élément de connexion (2) est monté dans ladite ouverture (O) et présente un corps annulaire (20) s'étendant autour d'un axe central (X) pour délimiter le canal (C2) d'évacuation d'air présent à l'intérieur du boîtier (P);
- le couvercle (3) se monte sur le corps annulaire (20) par emboîtement, suivant une première direction (D1), parallèlement à l'axe central (X), des moyens d'étanchéité (J2) permettant de réaliser un contact annulaire étanche (C3) entre le couvercle (3) et le corps annulaire (20) à l'issue de l'emboîtement ; et
- l'organe de verrouillage (4 ; 104 ; 204) verrouille la position axiale d'emboîtement du couvercle (3) dans laquelle le contact annulaire étanche (C3) est réalisé, en entourant ou en étant entouré par une portion de l'élément de connexion (2) elle-même entourée par le couvercle (3),
l'organe de verrouillage (4 ; 104) étant déformable, de préférence élastiquement déformable, de façon à :
- exercer une force de rappel radialement vers l'intérieur, pour permettre au moins un contact dudit organe (4 ; 104) avec l'élément de connexion (2) ; et
- déverrouiller l'emboîtement du couvercle (3) lorsque la surpression du côté de l'air présent dans le canal d'évacuation (C2) dépasse un seuil permettant de surmonter ladite force de rappel, ce grâce à quoi le couvercle (3) peut être repoussé suivant une deuxième direction (D2) opposée à la première direction (D1) pour libérer l'ouverture (O).

14. Procédé d'assemblage de l'agencement selon l'une quelconque des revendications 1 à 12, en utilisant l'élément de connexion (2) apte à se monter dans une ouverture (O) d'un boîtier de batterie en délimitant le canal (C2) d'évacuation d'air, le procédé comprenant les étapes consistant essentiellement à :
- fixer le joint annulaire (J1) sur la base (B) du corps annulaire (20) de l'élément de connexion (2);
- monter le couvercle (3) sur le corps annulaire (20) par emboîtement vers la base (B) en entourant le corps annulaire (20), de façon à ce que la portion d'obturation (30), recouvre un débouché axial du canal (C2);
- simultanément réaliser le contact annulaire étanche (C3) entre le couvercle (3) et le corps annulaire (20), grâce aux moyens d'étanchéité (J2) distincts du joint annulaire (J1), et verrouiller la position axiale d'emboîtement du couvercle (3) pour laquelle le contact annulaire étanche (C3) est réalisé, par l'au moins un organe de verrouillage (4 ; 104 ; 204) ; l'au moins un organe de verrouillage (4 ; 104 ; 204) étant mis en place sur le couvercle (3) de façon à :
- entourer ou être entouré par la zone de chevauchement (Z2 ; Z2' ; Z2") entre l'élément de connexion (2) et le couvercle (3), en venant en prise contre l'au moins une surface de butée axiale appartenant à l'élément de connexion (2), et
- pouvoir se déformer pour déverrouiller l'emboîtement du couvercle (3) lorsque la surpression du côté de l'air présent dans le canal d'évacuation (C2) dépasse un seuil.

15. Procédé selon la revendication 14, dans lequel le contact d'étanchéité (C3) et le verrouillage par ledit organe de verrouillage (4 ; 104 ; 104) sont obtenus dans une unité de ventilation préassemblée qui ne recouvre pas encore l'ouverture (O) du boîtier de batterie.

## Patentansprüche

1. Belüftungsanordnung (1) für Batteriegehäuse insbesondere mit einer oder mehreren Batterien, wobei die Anordnung (1) aufweist:
- ein Verbindungselement (2), das geeignet ist, um sich in eine Öffnung des Gehäuses (O) montieren zu lassen, wobei das Verbindungselement (2) einen ringförmigen Körper (20) hat, der sich um eine zentrale Achse (X) erstreckt und geeignet ist, um einen Luftablasskanal (C2), der zum Ablassen von im Innern des Gehäuses vorhandener Luft ist, zu begrenzen, der ringförmige Körper (20) eine ringförmige Basis (B) aufweist, die direkt oder über ein ringförmiges Dichtungselement (J1) ein axiales Halten gegen das Gehäuse erlaubt, der ringförmige Körper (20) distal zum Gehäuse, auf der zur Basis (B) entgegengesetzten Seite, einen freien Rand (21) aufweist;
- einen Deckel (3) zum Verschließen des Kanals, wobei der Deckel (3) durch Koppeln in Richtung einer Annäherung an die Basis (B) sich auf den ringförmigen Körper (20) montieren lässt, wobei der Deckel (3) einen Verschlussabschnitt (30) aufweist, der sich transversal bezüglich der zentralen Achse (X) erstreckt,
- Dichtungsmittel (J2), um zu erlauben, einen ringförmigen dichten Kontakt (C3) zwischen dem Deckel (3) und dem ringförmigen Körper (20) zu realisieren; und
- mindestens ein Verriegelungselement (4; 104; 204), das eine axiale Kopplungsposition des Deckels (3) verriegelt, für die der ringförmige dichte Kontakt (C3) realisiert ist;
in welcher das vorzugsweise ringförmige Verriegelungselement (4; 104; 204) sich längs des Verbindungselements (2) und/oder eines röhrenförmigen Abschnitts des Deckels (3) erstreckt und/oder das Verbindungselement (2) und/oder einen röhrenförmigen Abschnitt des Deckels (3) über mehr als einen halben Umfang umgibt, indem es in Eingriff gegen mindestens eine dem Verbindungselement (2) zugehörige axiale Anschlagfläche kommt,
und in welcher das Verriegelungselement (4; 104; 204), das separat zu dem Deckel (3), dem Verbindungselement (2) und den Dichtungsmitteln (J2) ist, verformbar ist, um die Kopplung des Deckels (3) zu entriegeln, wenn der Überdruck auf der Seite der in dem Ablasskanal (C2) vorhandenen Luft eine Schwelle überschreitet.

2. Anordnung nach Anspruch 1, in welcher das Verriegelungselement (4; 104; 204) eine Überlappungszone (Z2; Z2'; Z2") zwischen dem Verbindungselement (2) und dem Deckel (3) umgibt oder von einer solchen umgeben ist.

3. Anordnung nach Anspruch 1 oder 2, in welcher das Verriegelungselement (4; 104; 204) sich auf eine ringförmige Weise um die zentrale Achse (X) erstreckt, wobei das Verriegelungselement vorzugsweise aus einem Stück besteht, das durch Modifikation eines Raums zwischen zwei Enden dieses Stücks, die einander benachbart sind, verformbar ist.

4. Anordnung nach einem der vorstehenden Ansprüche, in welcher das Verriegelungselement (4; 104; 204) von dem Deckel (3) getragen wird.

5. Anordnung nach einem der vorstehenden Ansprüche, in welcher das mindestens eine Verriegelungselement (4; 104) aus einer Klammer besteht, die zwei Klemmzweige (B 1, B2) aufweist, die mit einem gleichen Zwischenabschnitt (40) verbunden sind.

6. Anordnung nach Anspruch 4 allein genommen oder in Kombination mit dem Anspruch 5, in welcher der Deckel (3) ferner einen röhrenförmigen Abschnitt (33; 133) aufweist, der geeignet ist, um einen in dem Verbindungselement (2) vorgesehenen Einsetzungsabschnitt (23; 123) aufzunehmen, und in welcher:
- das von dem röhrenförmigen Abschnitt (33; 133) getragene Verriegelungselement (4; 104) angepasst ist, um vorzugsweise von unten gegen einen dem Einsetzungsabschnitt (23; 123) zugehörigen Eingriffsrand (BP) in Eingriff zu kommen, um die axiale Kopplungsposition des Deckels (3) zu verriegeln, wobei diese Verriegelung nur in einer Überlappungsposition des röhrenförmigen Abschnitts (33; 133) um den Einsetzungsabschnitt (23; 123) realisierbar ist; und
- das Verriegelungselement (4; 104) sich in mindestens eine Aussparung oder ein Fenster (36; 300) des röhrenförmigen Abschnitts (33) erstreckt oder einschiebt, um eine Klemmwirkung auf den Einsetzungsabschnitt (23; 123) auszuüben, wobei durch radiale Verformung nach außen das Verriegelungselement (4; 104) elastisch verformbar ist.

7. Anordnung nach Anspruch 6, in welcher das Verriegelungselement (4; 104) aus einem einzigen Stück hergestellt ist, das geeignet ist, um den Einsetzungsabschnitt (23; 123) über den röhrenförmigen Abschnitt (33; 133) einzuklemmen.

8. Anordnung nach Anspruch 6 oder 7, in welcher der Einsetzungsabschnitt (123) eine Führungsstange ist, die sich linear in den röhrenförmigen Abschnitt (133) einschiebt, der als Hohlstange konzipiert ist, die mit mindestens einer Einkerbung oder einem Fenster (36) zur Aufnahme eines dem Verriegelungselement (104) zugehörigen Eingriffssegments (104b, 104c) versehen ist.

9. Anordnung nach Anspruch 6 oder 7, in welcher der Einsetzungsabschnitt (23) ein von der Basis (B) axial vorragender ringförmiger Vorsprung ist, der sich linear in den röhrenförmigen Abschnitt (33) einschiebt, der als Deckelschürze (3) konzipiert ist, die mit mindestens einer Einkerbung oder einem Fenster (300) zur Aufnahme eines dem Verriegelungselement (4) zugehörigen Eingriffssegments (4a, 4b, 4c) versehen ist.

10. Anordnung nach einem der vorstehenden Ansprüche, in welcher das Verbindungselement (2) einen Eingriffsrand (BP) aufweist, der ringförmig ist und/oder in mindestens zwei voneinander beabstandete Teilabschnitte aufgeteilt ist, wobei der Eingriffsrand (BP) sich in einem ringförmigen Bereich erstreckt, der konzentrisch bezüglich eines diesen Eingriffsrand umgebenden ringförmigen Trägerbereichs ist, wobei der ringförmige Trägerbereich zu dem Deckel (3) gehört, um das Verriegelungselement (4; 104) zu tragen,
und in welcher das Verriegelungselement (4; 104) mithilfe des ringförmigen Trägerbereichs verbunden mit dem Deckel (3) gehalten wird, sowohl in einer ersten Klemmkonfiguration mit Kontakt gegen das Verbindungselement (2) als auch in einer zweiten Klemmkonfiguration, die lockerer als die erste Klemmkonfiguration und mit einem Entkoppeln des Deckels (3) bezüglich des ringförmigen Körpers (20) vereinbar ist.

11. Anordnung nach einem der Ansprüche 1 bis 4, in welcher der Deckel (3) ferner einen vorzugsweise axial mit dem Verschlussabschnitt (30) verbundenen Trägerteil (34) aufweist, um das Verriegelungselement (204) zu tragen, das sich auf ringförmige Weise erstreckt, indem es sich in Umfangsrichtung längs einer Innenfläche des ringförmigen Körpers (20) erstreckt,
und in welcher das Verriegelungselement (204), das vorzugsweise aus einem einzigen Stück eines steifen Materials hergestellt ist, erlaubt, um durch Eingriff mit mindestens einem in der Innenfläche des ringförmigen Körpers (20) vorhandenen Innenrelief (R3) den Deckel (3) in der Kopplungsposition axial zu halten.

12. Anordnung nach einem der vorstehenden Ansprüche, in welcher das Verbindungselement (2) aus einem einzigen Stück hergestellt ist und zwei ringförmige Dichtungselemente trägt, nämlich:
- ein erstes Dichtungselement (J1), das vorzugsweise in einer inneren Auskehlung (G1) der Basis (B), die axial entgegengesetzt zum Verschlussabschnitt (30) ausmündet, eingesetzt ist, um eine ringförmige Abdichtung mit dem Gehäuse (P) zu realisieren; und
- ein zweites Dichtungselement (J2), das vorzugsweise in einer äußeren Umfangsauskehlung (G2) eingesetzt ist, um eine ringförmige Abdichtung mit dem Deckel (3) zu bekommen.

13. Verwendung eines verformbaren Elements (4; 104; 204) zur Verriegelung der Kopplung eines Deckels (3), um eine Öffnung (O), die in einem Batteriegehäuse (P) insbesondere mit einer oder mehreren Batterien vorgesehen ist, zu verschließen und zugleich eine Notbelüftung im Falle eines Luftüberdrucks in dem Gehäuse zu erlauben, **dadurch gekennzeichnet, dass** das verformbare Element (4; 104; 204) angeordnet ist, um in Eingriff gegen eine axiale Anschlagfläche einzutreten, die zu einem Verbindungselement (2) gehört, das einen von dem Deckel (3) verschlossenen Luftablasskanal (C2) bildet, mit der Besonderheit, dass:
- das Verbindungselement (2) in die Öffnung (O) montiert ist und einen sich um eine zentrale Achse (X) erstreckenden ringförmigen Körper (20) aufweist, um den Luftablasskanal (C2), der zum Ablassen von im Inneren des Gehäuses (P) vorhandener Luft ist, zu begrenzen;
- der Deckel (3) sich durch Koppeln in eine zur zentralen Achse (X) parallele erste Richtung (D1) an den ringförmigen Körper montieren lässt, wobei Abdichtungsmittel (J2) erlauben, nach erfolgter Kopplung einen ringförmigen dichten Kontakt (C3) zwischen dem Deckel (3) und dem ringförmigen Körper (20) zu realisieren; und
- das Verriegelungselement (4; 104; 204) die axiale Kopplungsposition des Deckels (3), in der der ringförmige dichte Kontakt (C3) realisiert ist, dadurch verriegelt, dass es einen Teil des Verbindungselements (2) umgibt oder von einem Teil des Verbindungselements (2) umgeben ist, das seinerseits von dem Deckel (3) umgeben ist;
wobei das Verriegelungselement (4; 104) verformbar ist, vorzugsweise elastisch verformbar ist, um:
- eine Rückstellkraft radial nach innen auszuüben, um mindestens einen Kontakt des Elements (4; 104) mit dem Verbindungselement (2) zu erlauben; und
- die Kopplung des Deckels (3) zu entriegeln, wenn der Überdruck auf der Seite der in dem Ablasskanal (C2) vorhandenen Luft eine Schwelle überschreitet, die ein Überwinden der Rückstellkraft erlaubt, dank dessen der Deckel (3) in eine zur ersten Richtung (D1) entgegengesetzte zweite Richtung (D2) gestoßen werden kann, um die Öffnung (O) freizugeben.

14. Verfahren zur Montage der Anordnung nach einem der Ansprüche 1 bis 12 unter Verwendung des Verbindungselements (2), das geeignet ist, um sich in eine Öffnung (O) eines Batteriegehäuses montieren zu lassen und dadurch einen Luftablasskanal (C2) zu begrenzen, wobei das Verfahren die Schritte aufweist, die im Wesentlichen bestehen aus:
- Fixieren des ringförmigen Dichtungselements (J1) an der Basis (B) des ringförmigen Körpers (20) des Verbindungselements (2);
- Montieren des Deckels (3) an den ringförmigen Körper (20) durch Koppeln hin zur Basis (B), dabei den ringförmigen Körper (20) umgebend, so dass der Verschlussabschnitt (30) eine axiale Ausmündung des Kanals (C2) bedeckt;
- gleichzeitig Realisieren des ringförmigen dichten Kontakts (C3) zwischen dem Deckel (3) und dem ringförmigen Körper (20) mithilfe von Dichtungsmitteln (J2), die separat zu dem ringförmigen Dichtungselement (J1) sind, und Verriegeln der axialen Kopplungsposition des Deckels (3), für die der ringförmige dichte Kontakt (C3) realisiert ist, mithilfe mindestens eines Verriegelungselements (4; 104; 204); wobei das mindestens eine Verriegelungselement (4; 104; 204) an dem Deckel (3) angeordnet wird, derart, dass:
- es eine Überlappungszone (Z2, Z2'; Z2") zwischen dem Verbindungselement (2) und dem Deckel (3) umgibt oder von einer solchen Überlappungszone (Z2, Z2'; Z2") umgeben ist, dadurch dass es in Eingriff gegen mindestens eine dem Verbindungselement (2) zugehörige axiale Anschlagfläche kommt, und
- es sich verformen kann, um die Kopplung des Deckels (3) zu entriegeln, wenn der Überdruck auf der Seite der in dem Luftablasskanal (C2) vorhandenen Luft eine Schwelle überschreitet.

15. Verfahren nach Anspruch 14, in welchem der Abdichtungskontakt (C3) und die Verriegelung mittels des Verriegelungselements (4; 104; 204) in einer vorgefertigten Belüftungseinheit erreicht sind, die die Öffnung (O) des Batteriegehäuses noch nicht bedeckt.

## Claims

1. A ventilation arrangement (1) for a battery case, in particular comprising one or more batteries, the arrangement (1) comprising:
- a connection element (2) capable of being mounted in an opening of the case (O), the connection element (2) having an annular body (20) extending around a central axis (X) and capable of delimiting an air evacuation channel (C2) present inside the case, the annular body (20) having an annular base (B) allowing axial retention against the case, directly or through an annular joint (J1), the annular body (20) having a free distal edge (21) of the case, opposite the base (B);
- a cover (3) for obturating the channel, the cover (3) being mounted on the annular body (20) by interlocking in a direction of approach towards the base (B), the cover (3) comprising an obturating portion (30), extending transversely with respect to the central axis (X);
- sealing means (J2) to enable a sealed annular contact (C3) to be made between the cover (3) and the annular body (20); and
- at least one locking member (4; 104; 204) locking an axial interlocking position of the cover (3) for which the sealed annular contact (C3) is made; wherein said locking member (4; 104; 204), preferably of annular shape, runs along and/or surrounds, over more than half a circumference, at least one of the connection element (2) and a tubular portion of the cover (3), engaging against at least one axial abutment surface belonging to the connection element (2),
and wherein said locking member (4; 104; 204), which is distinct from the cover (3), the connection element (2) and the sealing means (J2), is deformable to unlock the interlocking of the cover (3) when the overpressure on the side of the air present in the evacuation channel (C2) exceeds a threshold.

2. The arrangement according to claim 1, wherein said locking member (4; 104; 204) surrounds or is surrounded by an overlapping area (Z2; Z2'; Z2") between the connection element (2) and the cover (3).

3. The arrangement according to claim 1 or 2, wherein the locking member (4; 104; 204) extends annularly around the central axis (X), the locking member preferably consisting of a deformable part by modifying a spacing between two ends of this part which are close to each other.

4. The arrangement according to any one of the preceding claims, wherein the locking member (4; 104; 204) is supported by the cover (3).

5. The arrangement according to any one of the preceding claims, wherein the at least one locking member (4; 104) consists of a clip which has two enclosing branches (B 1, B2) connected to the same intermediate portion (40).

6. The arrangement according to claim 4 taken alone or in combination with claim 5, wherein the cover (3) further has a tubular portion (33; 133) capable of housing an insertion portion (23; 123) provided in the connection element (2), and wherein:
- the locking member (4; 104), supported by the tubular portion (33; 133), is adapted to be engaged, preferably from below, against a gripping edge (BP) belonging to the insertion portion (23; 123) to lock the axial interlocking position of the cover (3), this locking being achievable only in an overlapping position of the tubular portion (33; 133) around the insertion portion (23; 123); and
- the locking member (4; 104) extends or is inserted into at least one recess or window (36; 300) of the tubular portion (33) in order to exert a clamping action against the insertion portion (23; 123), the locking member (4; 104) being elastically deformable by radial deformation towards the outside.

7. The arrangement according to claim 6, wherein the locking member (4; 104) is made in one piece capable of enclosing the insertion portion (23; 123) through the tubular portion (33; 133).

8. The arrangement according to claim 6 or 7, wherein the insertion portion (123) is a guide rod which is inserted linearly into the tubular portion (133) designed as a hollow rod, provided with at least one notch or window (36) for receiving an engagement segment (104b, 104c) belonging to the locking member (104).

9. The arrangement according to claim 6 or 7, wherein the insertion portion (23) is an annular projection, axially protruding from the base (B), which is inserted linearly into the tubular portion (33) designed as a skirt of the cover (3), provided with at least one notch or window (300) for receiving an engagement segment (4a, 4b, 4c) belonging to the locking member (4).

10. The arrangement according to any one of the preceding claims, wherein the connection element (2) has a gripping edge (BP) of annular shape and/or distributed in at least two slices spaced from one another, said gripping edge (BP) extending in an annular region concentric with respect to an annular support region surrounding this gripping edge, the annular support region belonging to the cover (3) to support the locking member (4; 104),
and wherein the locking member (4; 104) is held integral with the cover (3) by the annular support region, both in a first enclosing configuration with contact against the connection element (2) and in a second enclosing configuration, looser than the first enclosing configuration and compatible with a disengagement of the cover (3) from the annular body (20).

11. The arrangement according to any one of claims 1 to 4, wherein the cover (3) further has a support stretch (34) connected, preferably axially, to the obturating portion (30), to carry the locking member (204) which extends in an annular manner circumferentially along an internal face of the annular body (20),
and wherein the locking member (204) allows to axially retain the cover (3) in the interlocking position by engaging against at least one internal relief (R3) included in said internal face of the annular body (20), which is preferably made in one piece of rigid material.

12. The arrangement according to any one of the preceding claims, wherein the connection element (2) is made in one piece and carries two annular seals, namely:
- a first seal (J1), preferably housed in an inner groove (G1) of the base (B) which opens axially opposite the obturating portion (30), in order to achieve an annular seal with the case (P); and
- a second seal (J2), preferably housed in a circumferential outer groove (G2), to obtain an annular sealing with the cover (3).

13. A use of a deformable member (4; 104; 204) to lock the interlocking of a cover (3) in order to obturate an opening (O) provided in a battery case (P), in particular comprising one or more batteries, while allowing emergency ventilation in the event of excess air pressure in the case, **characterised in that** the deformable member (4; 104; 204) is disposed to engage against an axial abutment surface belonging to a connection element (2) forming an air evacuation channel (C2) obturated by the cover (3), with the particularity that:
- the connection element (2) is mounted in said opening (O) and has an annular body (20) extending around a central axis (X) to delimit the air evacuation channel (C2) present inside the case (P);
- the cover (3) is mounted on the annular body (20) by interlocking, in a first direction (D1), parallel to the central axis (X), sealing means (J2) allowing to make a sealed annular contact (C3) between the cover (3) and the annular body (20) at the end of the interlocking; and
- the locking member (4; 104; 204) locks the axial interlocking position of the cover (3) wherein the sealed annular contact (C3) is made, by surrounding or being surrounded by a portion of the connection element (2) itself surrounded by the cover (3),
the locking member (4; 104) being deformable, preferably elastically deformable, so as to:
- exert a return force radially inwards, to allow at least one contact of said member (4; 104) with the connection element (2); and
- unlock the interlocking of the cover (3) when the overpressure on the side of the air present in the evacuation channel (C2) exceeds a threshold allowing to overcome said return force, whereby the cover (3) can be pushed back in a second direction (D2) opposite the first direction (D1) to release the opening (O).

14. A method for assembling the arrangement according to any one of claims 1 to 12, using the connection element (2) capable of being mounted in an opening (O) of a battery case by delimiting the air evacuation channel (C2), the method comprising the steps essentially consisting in:
- fixing the annular seal (J1) on the base (B) of the annular body (20) of the connection element (2);
- mounting the cover (3) on the annular body (20) by interlocking towards the base (B) surrounding the annular body (20), so that the obturating portion (30) covers an axial outlet of the channel (C2);
- simultaneously making the sealed annular contact (C3) between the cover (3) and the annular body (20), thanks to the sealing means (J2) distinct from the annular seal (J1), and locking the axial interlocking position of the cover (3) for which the sealed annular contact (C3) is made, by the at least one locking member (4; 104; 204); the at least one locking member (4; 104; 204) being placed on the cover (3) so as to:
- surround or be surrounded by the overlapping area (Z2; Z2'; Z2") between the connection element (2) and the cover (3), engaging against at least one axial abutment surface belonging to the connection element (2), and
- be able to deform to unlock the interlocking of the cover (3) when the overpressure on the side of the air present in the evacuation channel (C2) exceeds a threshold.

15. The method according to claim 14, wherein the sealing contact (C3) and the locking by said locking member (4; 104; 104) are obtained in a preassembled ventilation unit which does not yet cover the opening (O) of the battery case.
